# EUROPEAN PATENT SPECIFICATION

(11) **EP 3 166 356 B1**
(45) Date of publication and mention of the grant of the patent: **30.12.2020**
(21) Application number: 16192484.0
(22) Date of filing: 05.10.2016
(51) Int. Cl.: H04W 8/18, H04W 48/20, H04W 36/00

(54) **METHODS FOR PERFORMING RADIO MEASUREMENTS AND MOBILE TERMINAL DEVICES**
VERFAHREN ZUR DURCHFÜHRUNG VON FUNKMESSUNGEN UND MOBILE ENDGERÄTEVORRICHTUNGEN
PROCÉDÉ DE TRAITEMENT DE MESURES RADIO ET DISPOSITIFS DE TERMINAL MOBILE

(30) Priority: 03.11.2015 US 201514930702
(43) Date of publication of application: 10.05.2017
(73) Proprietor: Apple Inc., Cupertino, CA 95014 (US)
(72) Inventor: DEV, Rishav, 560048 Bangalore (IN); SHAIKH, Mahammad Gous, 560029 Bangalore (IN)
(74) Representative: Lang, Johannes

(56) References cited:
- EP-A1- 2 512 195
- WO-A2-2015/105813
- US-A1- 2014 036 710
- US-A1- 2014 146 732
- US-A1- 2015 296 364

## Description

### Technical Field

Various embodiments relate generally to methods for performing radio measurements and mobile terminal devices.

### Background

Mobile terminals with multiple Subscriber Identity Modules (SIMs) have increased in popularity in recent years. The complexity of multi-SIM designs may depend on the flexibility in operation desired for each included SIM. For example, multi-SIM designs known as Single Receive Dual-SIM Dual-Standby (SR-DSDS) may incorporate two separate SIMs but may only provide a single transceiver system. As a result, only one SIM may be able to actively transmit and receive voice or packet data at a given time. Both SIMs may still be able to operate passively (hence "standby") and may utilize a time-multiplexing scheme in which both SIMs alternatively share use of the transceiver.

Dual-Receive Dual-SIM Dual-Standby (DR-DSDS) designs may allow both SIMs to concurrently receive data by incorporating two separate receiver subsystems (i.e. receive chain). Each SIM may thus be granted exclusive use of one of the receiver subsystems and accordingly may receive data without interruption from the other SIM. However, DR-DSDS designs may provide only a single transmitter subsystem, and a result only one SIM may be able to transmit data at a given time.

Dual-SIM Dual-Active (DSDA) designs may expand on DR-DSDS multi-SIM designs by providing two separate transceiver systems. Each SIM may thus be granted exclusive access to one of the transceiver systems and may be able to both transmit and receive data independently in parallel with the other SIM.

WO 2015/105813 A2 discloses methods and apparatus for cooperating between wireless wide area network radios and wireless local area network radios.

US 2015/296364 A1 discloses a system and methods for increasing efficiency of a public land mobile network search in service acquisition on a multi-SIM wireless device.

US 2014/036710 A1 discloses inter-RAT measurements for a dual-sim dual-active device.

EP 2 512 195 A1 discloses measurement gaps triggering for a multi SIM mobile device. US 2014/146732 A1 discloses methods and apparatus for cooperating between wireless wide area network radios and wireless local area network radios.

### SUMMARY

The invention is set out in the appended set of claims.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. **1** shows a block diagram illustrating an internal configuration of a mobile terminal;
FIG. **2** shows a block diagram illustrating an internal configuration of a baseband modem;
FIG. **3** shows a block diagram illustrating an internal configuration master and slave RATs within a baseband modem;
FIG. **4** shows a message sequence chart illustrating the operation of a measurement manager in a first exemplary scenario;
FIG. **5** shows a message sequence chart illustrating the operation of a measurement manager in a second exemplary scenario;
FIG. **6** shows a message sequence chart illustrating the operation of a measurement manager in a third exemplary scenario;
FIG. **7** shows a timing chart illustrating the operation of a measurement manager in a fourth exemplary scenario;
FIG. **8** shows a timing chart illustrating the operation of a measurement manager in a fifth exemplary scenario;
FIGs. **9A** and **9B** show a timing chart illustrating the operation of a measurement manager in a sixth and seventh exemplary scenario;
FIG. **10** shows a flow chart detailing the operation of a measurement manager;
FIG. **11** shows a flow chart illustrating a first method for performing radio measurements; and
FIG. **12** shows a flow chart illustrating a second method for performing radio measurements.

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

The words "plural" and "multiple" in the description and the claims, if any, are used to expressly refer to a quantity greater than one. Accordingly, any phrases explicitly invoking the aforementioned words (e.g. "a plurality of [objects]", "multiple [objects]") referring to a quantity of objects is intended to expressly refer more than one of the said objects. The terms "group", "set", "collection", "series", "sequence", "grouping", "selection", etc., and the like in the description and in the claims, if any, are used to refer to a quantity equal to or greater than one, i.e. one or more. Accordingly, the phrases "a group of [objects]", "a set of [objects]", "a collection of [objects]", "a series of [objects]", "a sequence of [objects]", "a grouping of [objects]", "a selection of [objects]", "[object] group", "[object] set", "[object] collection", "[object] series", "[object] sequence", "[object] grouping", "[object] selection", etc., used herein in relation to a quantity of objects is intended to refer to a quantity of one or more of said objects. It is appreciated that unless directly referred to with an explicitly stated plural quantity (e.g. "two [objects]" "three of the [objects]", "ten or more [objects]", "at least four [objects]", etc.) or express use of the words "plural", "multiple", or similar phrases, references to quantities of objects are intended to refer to one or more of said objects.

It is appreciated that any vector and/or matrix notation utilized herein is exemplary in nature and is employed solely for purposes of explanation. Accordingly, it is understood that the approaches detailed in this disclosure are not limited to being implemented solely using vectors and/or matrices, and that the associated processes and computations may be equivalently performed with respect to sets, sequences, groups, etc., of data, observations, information, signals, etc.

Furthermore, it is appreciated that references to a "vector" may refer to a vector of any size or orientation, e.g. including a lxl vector (e.g. a scalar), a lxM vector (e.g. a row vector), and an Mxl vector (e.g. a column vector). Similarly, it is appreciated that references to a "matrix" may refer to matrix of any size or orientation, e.g. including a lxl matrix (e.g. a scalar), a lxM matrix (e.g. a row vector), and an Mxl matrix (e.g. a column vector).

As used herein, a "circuit" may be understood as any kind of logic implementing entity (analog or digital), which may be special purpose circuitry or a processor executing software stored in a memory, firmware, hardware, or any combination thereof. Furthermore, a "circuit" may be a hard-wired logic circuit or a programmable logic circuit such as a programmable processor, for example a microprocessor (for example a Complex Instruction Set Computer (CISC) processor or a Reduced Instruction Set Computer (RISC) processor). A "circuit" may also be a processor executing software, for example any kind of computer program, for example a computer program using a virtual machine code such as for example Java. Any other kind of implementation of the respective functions which will be described in more detail below may also be understood as a "circuit". It is understood that any two (or more) of the described circuits may be combined into a single circuit with substantially equivalent functionality, and conversely that any single described circuit may be distributed into two (or more) separate circuits with substantially equivalent functionality. In particular with respect to the use of "circuitry" in the claims included herein, the use of "circuit" may be understood as collectively referring to two or more circuits.

A "processing circuit" (or equivalently "processing circuitry") as used herein is understood as referring to any circuit that performs an operation(s) on signal(s), such as e.g. any circuit that performs processing on an electrical signal or an optical signal. A processing circuit may thus refer to any analog or digital circuitry that alters a characteristic or property of an electrical or optical signal, which may include analog and/or digital data. A processing circuit may thus refer to an analog circuit (explicitly referred to as "analog processing circuit(ry)"), digital circuit (explicitly referred to as "digital processing circuit(ry)"), logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Accordingly, a processing circuit may refer to a circuit that performs processing on an electrical or optical signal as hardware or as software, such as software executed on hardware (e.g. a processor or microprocessor). As utilized herein, "digital processing circuit(ry)" may refer to a circuit implemented using digital logic that performs processing on a signal, e.g. an electrical or optical signal, which may include logic circuit(s), processor(s), scalar processor(s), vector processor(s), microprocessor(s), controller(s), microcontroller(s), Central Processing Unit(s) (CPU), Graphics Processing Unit(s) (GPU), Digital Signal Processor(s) (DSP), Field Programmable Gate Array(s) (FPGA), integrated circuit(s), Application Specific Integrated Circuit(s) (ASIC), or any combination thereof. Furthermore, it is understood that a single a processing circuit may be equivalently split into two separate processing circuits, and conversely that two separate processing circuits may be combined into a single equivalent processing circuit.

As used herein, "memory" may be understood as an electrical component in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, etc., or any combination thereof. Furthermore, it is appreciated that registers, shift registers, processor registers, data buffers, etc., are also embraced herein by the "term" memory. It is appreciated that a single component referred to as "memory" or "a memory" may be composed of more than one different type of memory, and thus may refer to a collective component comprising one or more types of memory. It is readily understood that any single memory "component" may be distributed or/separated multiple substantially equivalent memory components, and vice versa. Furthermore, it is appreciated that while "memory" may be depicted, such as in the drawings, as separate from one or more other components, it is understood that memory may be integrated within another component, such as on a common integrated chip.

The term "base station" used in reference to an access point of a mobile communication network may be understood as a macro base station, micro base station, Node B, evolved NodeBs (eNB), Home eNodeB, Remote Radio Head (RRH), relay point, etc.

As used herein, a "cell" in the context of telecommunications may be understood as a sector served by a base station. Accordingly, a cell may be a set of geographically co-located antennas that correspond to a particular sectorization of a base station. A base station may thus serve one or more "cells" (or sectors), where each cell is characterized by a distinct communication channel. Furthermore, the term "cell" may be utilized to refer to any of a macrocell, microcell, femtocell, picocell, etc.

It is appreciated that the ensuing description may detail exemplary scenarios involving mobile device operating according to certain 3GPP (Third Generation Partnership Project) specifications, notably Long Term Evolution (LTE) and Long Term Evolution-Advanced (LTE-A). It is understood that such exemplary scenarios are demonstrative in nature, and accordingly may be similarly applied to other mobile communication technologies and standards, such as WLAN (wireless local area network), WiFi, UMTS (Universal Mobile Telecommunications System), GSM (Global System for Mobile Communications), Bluetooth, CDMA (Code Division Multiple Access), Wideband CDMA (W-CDMA), etc. The examples provided herein are thus understood as being applicable to various other mobile communication technologies, both existing and not yet formulated, particularly in cases where such mobile communication technologies share similar features as disclosed regarding the following examples.

The term "network" as utilized herein, e.g. in reference to a communication network such as a mobile communication network, is intended to encompass both an access component of a network (e.g. a radio access network (RAN) component) and a core component of a network (e.g. a core network component).

As utilized herein, the term "radio idle mode" or "radio idle state" used in reference to a mobile terminal refers to a radio control state in which the mobile terminal is not allocated at least one dedicated communication channel of a mobile communication network. The term "radio connected mode" or "radio connected state" used in reference to a mobile terminal refers to a radio control state in which the mobile terminal is allocated at least one dedicated uplink communication channel of a mobile communication network.

Unless explicitly specified, the terms "transmit" and "send" encompass both direct and indirect transmission and sending. Similarly, the term "receive" encompasses both direct and indirect reception unless explicitly specified. As utilized herein, the term "derived from" designates being obtained directly or indirectly from a specific source. Accordingly, data derived from a source includes data obtained directly from the source or indirectly from the source, i.e. through one or more secondary agents.

Dual-Receive Dual-SIM-Dual-Standby (DR-DSDS) and Dual-SIM Dual-Active (DSDA) designs for multi-SIM mobile terminals may each incorporate two separate receiver subsystems. As a result, DR-DSDS and DSDA mobile terminals may be able to concurrently receive a separate data stream for each SIM.

A baseband modem (or collection of baseband modems dependent on the specifics of each multi-SIM design) may thus be able to support a separate mobile network connection for each SIM, which may include performing various intra-frequency, inter-frequency, and inter-RAT (radio access technology) radio measurements. A multi-SIM mobile terminal may reduce power consumption and improve radio measurement speed by coordinating radio measurements and sharing measurement results between RATs of each SIM that are equivalent. Accordingly, a baseband modem may include a measurement management entity to coordinate radio measurements between certain protocol layers of each RAT.

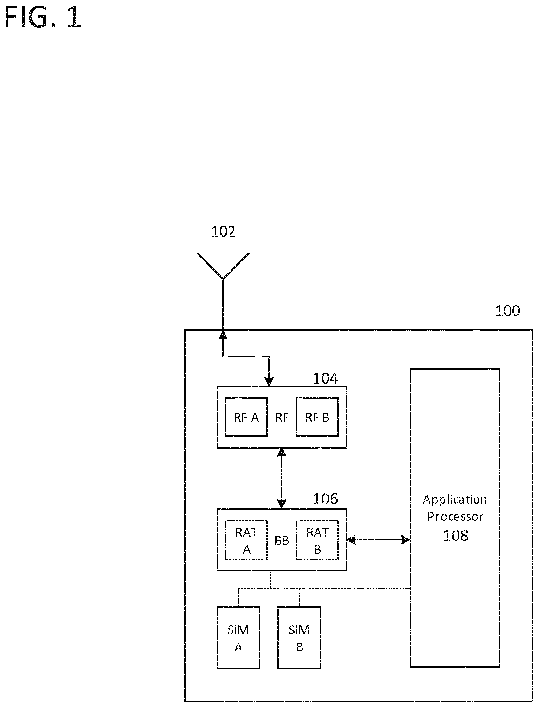

FIG. **1** shows a block diagram illustrating an internal configuration of mobile terminal **100**. Mobile terminal **100** may be a multi-SIM mobile terminal, and accordingly may include at least **SIMA** and **SIMB**. It is appreciated that mobile terminal **100** may additionally include a third SIM **SIMC**, a fourth SIM **SIMD,** etc., and that the operations detailed herein may be similarly applied to further SIMs in an analogous manner, such as by sharing measurement results between more than two SIMs.

As illustrated in FIG. **1**, mobile terminal **100** may include antenna **102**, radio frequency (RF) transceiver **104**, baseband modem **106**, application processor **108, SIMA**, and **SIMB**. As shown in in FIG. **1**, the aforementioned components of mobile terminal **100** may be implemented as separate components. However, it is appreciated that the architecture of mobile terminal **100** depicted in FIG. **1** is for purposes of explanation, and accordingly one or more of the aforementioned components of mobile terminal **100** may be integrated into a single equivalent component or divided into two separate components with collective equivalence. It is understood that mobile terminal **100** may have one or more additional components, such as additional hardware, software, or firmware elements. For example, mobile terminal **100** may further include various additional components including processors/microprocessors, controllers/microcontrollers, memory, other specialty or generic hardware/processors/circuits, etc., in order to support a variety of additional operations. Mobile terminal **100** may also include a variety of user input/output devices (display(s), keypad(s), touchscreen(s), speaker(s), external button(s), camera(s), microphone(s), etc.), peripheral device(s), memory, power supply, external device interface(s), subscriber identify module(s) (SIM) etc.

It is appreciated that the aforementioned components of mobile terminal **100**, in particular, RF transceiver **104**, baseband modem **106**, and application processor **108**, may be implemented in a number of different manners, such as by hardware, firmware, software executed on hardware (e.g. a processor), or any combination thereof. Various options include analog circuit(s), digital circuit(s), logic circuit(s), processor(s), microprocessor(s), controller(s), microcontroller(s), scalar processor(s), vector processor(s), Central Processing Unit(s) (CPU), Graphics Processing Unit(s) (GPU), Digital Signal Processor(s) (DSP), Field Programmable Gate Array(s) (FPGA), integrated circuit(s), or Application Specific Integrated Circuit(s) (ASIC).

As will be detailed, in an aspect of the disclosure mobile terminal **100** may be a mobile terminal device comprising a first SIM (**SIMA**), a second SIM (**SIMB**), a radio processing circuit (RF transceiver **104**) and a baseband processing circuit (baseband modem **106**) adapted to interact with the radio processing circuit. The baseband processing circuit may be configured to provide one or more first measurement targets of a first radio measurement of a first SIM, identify one or more common measurement results from one or more measurement results of a second radio measurement of the second SIM, wherein at least one of the one or more common measurement results corresponds to a measurement target of the one or more first measurement targets of the first radio measurement, provide the one or more common measurement results to the first radio measurement as one or more measurement results of the first radio measurement, and perform mobility operations with the one or more measurement results of the first radio measurement or the one or more measurement results of the second radio measurement. In a further aspect of the disclosure, the baseband processing circuit may be configured to provide one or more first inter-RAT measurement targets of a first radio measurement of a master RAT of the first SIM, identify one or more common measurement results from one or more measurement results of a second radio measurement of a second SIM, wherein at least one of the one or more common measurement results corresponds to an inter-RAT measurement target of the one or more first measurement targets of the first radio measurement, provide the one or more common measurement results to the first radio measurement as one or more inter-RAT measurements results of the first radio measurement, and perform mobility operations with the one or more measurement results of the first radio measurement or the one or more measurement results of the second radio measurement.

In an abridged overview of the operation of mobile terminal **100**, mobile terminal **100** may be configured to receive and/or transmit wireless signals according to multiple different wireless access protocols or radio access technologies (RATs), including any one of, or any combination of, LTE (Long Term Evolution), WLAN (wireless local area network), WiFi, UMTS (Universal Mobile Telecommunications System), GSM (Global System for Mobile Communications), Bluetooth, CDMA (Code Division Multiple Access), Wideband CDMA (W-CDMA), etc. The RAT capabilities of mobile terminal **100** may be determined by one or more Subscriber Identity Modules (SIM) included in mobile terminal **100**, such as **SIMA** and **SIMB**.

Further to the abridged overview of operation of mobile terminal **100**, RF transceiver **104** may receive radio frequency wireless signals via antenna **102**, which may be implemented as e.g. a single antenna or an antenna array composed of multiple antennas. As previously indicated, mobile terminal **100** may operate according to a DSDA or DR-DSDS multi-SIM design. Accordingly, RF transceiver **104** may include two separate receiver subsystems **RFA** and **RFB** in addition to at least one transmitter subsystem (e.g. one transmitter subsystem for DR-DSDS or two transmitter subsystems for DSDA, not explicitly shown in FIG. 1). Receiver subsystems **RFA** and **RFB** of RF transceiver **104** may include various reception circuitry elements, which may include e.g. analog circuitry, configured to process externally received signals, such as mixing circuity to convert externally received RF signals to baseband and/or intermediate frequencies. Receiver subsystems **RFA** and **RFB** of RF transceiver **104** may also include amplification circuitry to amplify externally received signals, such as power amplifiers (PAs) and/or Low Noise Amplifiers (LNAs), although it is appreciated that such components may also be implemented separately. RF transceiver **104** may additionally include at least one transmitter subsystem (not explicitly shown in FIG. **1**), which may include various transmission circuitry elements configured to transmit internally received signals, such as e.g. baseband and/or intermediate frequency signals provided by baseband modem **106**, which may include mixing circuitry to modulate internally received signals onto one or more radio frequency carrier waves and/or amplification circuitry to amplify internally received signals before transmission. The at least one transmitter subsystem of RF transceiver **104** may provide such signals to antenna **102** for wireless transmission. Further references herein to reception and/or transmission of wireless signals by mobile terminal **100** may thus be understood as an interaction between antenna **102**, RF transceiver **104** (including **RFA**, **RFB**, and the at least one transmitter subsystem), and baseband modem **106** as detailed above. Although not explicitly depicted in FIG. **1**, RF transceiver **104** may be additionally be connected to application processor **108**.

For purposes of explanation, **RFA** may be assigned to **SIMA** and **RFB** may be assigned to **SIMB**. Accordingly, **RFA** may perform reception procedures for **SIMA** while **RFB** may perform reception procedures for **SIMB**, e.g. by receiving and processing radio frequency signals for **SIMA** and **SIMB**, respectively, and providing resulting baseband signals to baseband modem **106** for further processing in accordance with the radio access technology protocols for **SIMA** and **SIMB**. The at least one transmitter subsystem of RF transceiver **104** may perform transmission procedures for both **SIMA** and **SIMB**, which may operate on a time-sharing basis (e.g. DR-DSDS) or a concurrent parallel operation basis (e.g. DSDA).

Similarly, baseband modem **106** may include at least two separate radio access technology (RAT) interfaces **RATA** and **RATB**. It is appreciated that baseband modem **106** may be realized as multiple separate baseband modem components, such as separate baseband modems for each supported RAT of **SIMA** and **SIMB**. Alternatively, baseband modem **106** may e.g. by realized as two separate baseband modems, e.g. a first baseband modem for **SIMA** and a second baseband modem for **SIMB**, where the first and second baseband modems support each supported RAT of **SIMA** and **SIMB** (e.g. single-RAT or multi-mode depending on the RAT capabilities of each of **SIMA** and **SIMB**). Alternatively, baseband modem **106** may be realized as a single baseband modem capable of supporting multiple SIMs and multiple RATs in accordance with the RAT capabilities of **SIMA** and **SIMB**.

As will be detailed, each RAT interface **RATA** and **RATB** may be composed of hardware, software, and/or firmware components, which may be physically dedicated to one of **SIMA** or **SIMB** or shared between **SIMA** and **SIMB**. For purposes of explanation, **RATA** may be correspond to the master and slave (if any) RAT interfaces of **SIMA** and **RATB** may correspond to the master and slave (if any) RAT interfaces of **SIMB**. As used herein, the term "interface" refers to the upper protocol stack (Layer 2 and Layer 3) and physical (Layer 1) layers for a radio access technology (RAT). RAT interface **RATA** may therefore include the RAT interfaces supported by **SIMA**, i.e. may be composed of the upper protocol stack and physical layers for each RAT supported by **SIMA**. Similarly, RAT interface **RATB** may be composed of the upper protocol stack and physical layers supported by **SIMB**. Such will subsequently be explained in further detail.

RAT interfaces **RATA** and **RATB** may control mobile communication operations of mobile terminal **100** as specified by **SIMA** and **SIMB**. For example, **RATA** and **RATB** may directly or indirectly control operation of antenna **102**, **RFA** and **RFB** (respectively), and the at least one transmitter subsystem of RF transceiver **104** to transmit and receive mobile communication data for **SIMA** and **SIMB**. Specifically, RAT interfaces **RATA** and **RATB** may control mobile communication operations in accordance with Layers 1-3 of the one or more RATs supported by each of **SIMA** and **SIMB**.

**SIMA** and **SIMB** may each support one or more RATs. In an exemplary configuration, **SIMA** may support GSM, UMTS, and LTE, while **SIMB** may only support GSM. RAT interface **RATA** may therefore be composed of RAT interfaces for GSM, UMTS, and LTE, while **RATB** may only be composed of a RAT interface for GSM. Dependent on the current state of mobile terminal **100**, one RAT of RAT interface **RATA** may assume a master RAT role while the remaining RATs may assume a slave RAT role (which may change over time). Further to the exemplary configuration, the LTE interface of **RATA** may assume the master RAT role at an arbitrary time while the GSM and UMTS interfaces of **RATA** may assume slave RAT roles. As **SIMB** only supports GSM, the GSM interface of **RATB** may maintain the master RAT role.

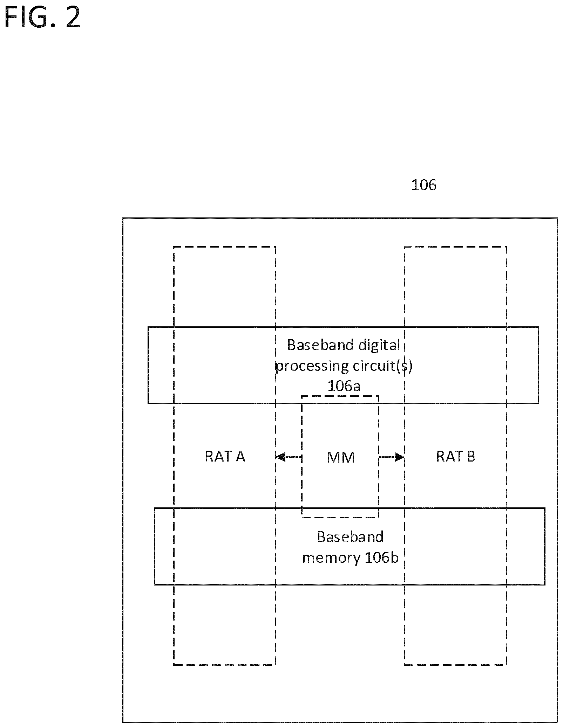

As shown in FIG. **2**, baseband modem **106** may be structurally composed of baseband digital processing circuit(s) (one or more) **106a** and baseband memory **106b**. Although not explicitly shown in FIG. **2**, baseband modem **106** may additionally include one or more analog processing circuits.

Digital processing circuit(s) **106a** may be composed of various processing circuitry configured to perform baseband (herein also including "intermediate") frequency processing, such as Analog to Digital Converters (ADCs) and/or Digital to Analog Converters (DACs), modulation/demodulation circuitry, encoding/decoding circuitry, audio codec circuitry, digital signal processing circuitry, etc. Digital processing circuit(s) **106a** may include hardware, software, or a combination of hardware and software. Specifically, digital processing circuit(s) **106a** of baseband modem **106** may include one or more logic circuits, processors, microprocessors, controllers, microcontrollers, scalar processors, vector processors, Central Processing Units (CPU), Graphics Processing Units (GPU) (including General-Purpose Computing on GPU (GPGPU)), Digital Signal Processors (DSP), Field Programmable Gate Arrays (FPGA), integrated circuits, Application Specific Integrated Circuits (ASIC), etc., or any combination thereof. It is understood that a person of skill in the art will appreciate the corresponding structure disclosed herein, be it in explicit reference to a physical structure and/or in the form of mathematical formulas, prose, flow charts, or any other manner providing sufficient structure (such as e.g. regarding an algorithm). The components of baseband modem **106** may be detailed herein in terms of functional operation with recognition that a person of skill in the art will readily appreciate the various possible structural realizations of baseband modem **106** using digital processing circuitry that will provide the desired functionality.

Baseband memory **106b** may include volatile and/or non-volatile memory, including random access memory (RAM), read-only memory (ROM), flash memory, solid-state storage, magnetic tape, hard disk drive(s), optical drive(s), register(s), shift register(s), processor register(s), data buffer(s) etc., or any combination thereof. Baseband memory **106b** may be configured to store software elements, e.g. program code, which may be retrieved and executed using a processor component of digital processing circuit(s) **106a.** Although depicted as a single component in FIG. **1**, baseband memory **106b** may be implemented as one or more separate components in baseband modem **106**. Baseband memory **106b** may also be partially or fully integrated with digital processing circuit(s) **106a.**

As previously indicated, **RATA** and **RATB** may be composed of the upper protocol stack (Layer 2 and 3) and physical (Layer 1) layers for one or more RAT interfaces, where **RATA** and **RATB** may control mobile communication operations of mobile terminal **100** in accordance with the upper protocol stack and physical layers for each RAT interface. Accordingly, RAT interfaces **RATA** and **RATB** may be structurally composed of hardware, software, and/or firmware elements to control and execute mobile communication operations. As shown in FIG. **2**, **RATA**, **RATB**, and **MM** (as will be subsequently introduced) may be composed of circuitry and memory components of baseband digital processing circuit(s) **106a** and baseband memory **106b.**

For example, each of RAT interfaces **RATA** and **RATB** may include a control circuit of baseband digital processing circuit(s) **106a** configured to retrieve (e.g. from baseband memory **106b**) and execute program code (e.g. software) corresponding to the upper protocol stack and physical layer software modules for each RAT interface in order to control transmission and reception of mobile communication data. The control circuit may be e.g. a microprocessor or microcontroller such as e.g. a protocol processor configured to retrieve and execute program code for upper protocol stack and physical layer software modules. Each of RAT interfaces **RATA** and **RATB** may also include other digital processing circuits of baseband digital processing circuits **106a**, which the control circuits may control in order to perform various signal processing operations in accordance with the individual RAT interfaces of **RATA** and **RATB**.

As previously indicated, each of RAT interfaces **RATA** and **RATB** may include a master RAT and potentially one or more slave RATs according to the RAT capabilities of **SIMA** and **SIMB.** Returning to the exemplary configuration introduced above, **SIMA** may support GSM, UMTS, and LTE operation while **SIMB** may only support GSM operation. Accordingly, **RATA** may include upper protocol stack and physical layers for each of GSM, UMTS, and LTE, while **RATB** may only include upper protocol stack and physical layers for GSM. The respective control circuits of **RATA** and **RATB** may therefore retrieve and execute upper protocol stack and physical layer software modules to control mobile communication operations in accordance with the individual RAT interfaces of **RATA** and **RATB**. It is appreciated that the control circuits may be unified or discrete relative to **RATA** and **RATB**. For example, a single processor of baseband digital processing circuit(s) **106a** may execute the upper protocol stack and physical layers for each RAT of **RATA** and **RATB**, such as a single processor executing the LTE interface of **RATA** as the master RAT of **RATA**, the GSM interface of **RATB** as the master RAT of **RATB**, and the UMTS and GSM interfaces of **RATA** as the slave RATs of **RATA**, e.g. as software modules. Alternatively, individual processors of baseband digital processing circuit(s) **106a** may each execute the upper protocol stack and physical layers for a single RAT of **RATA** and **RATB**, e.g. as software modules. Alternatively, a first processor baseband digital processing circuit(s) **106a** may execute the upper protocol stack and physical layers for each RAT of **RATA** while a second processor of baseband digital processing circuit(s) **106a** may execute the upper protocol stack and physical layers for each RAT of **RATB**. Each processor may then control one or more digital processing circuits of baseband digital processing circuit(s) **106a** in order to perform a variety of signal processing operations in accordance with the protocols of each RAT. Many such variations are recognized as viable and are accordingly embraced herein.

It is thus appreciated that baseband digital processing circuit(s) **106a** and baseband memory **106b** may be configured to execute each of the master and slave RATs of **RATA** and **RATB**, where a single respective RAT of **RATA** and **RATB** assumes a master RAT role and the remaining respective RATs (if any) of **RATA** and **RATB** assume a slave RAT role. Accordingly, RAT interfaces **RATA** and **RATB** of baseband modem **106** may execute control directly or indirectly over operation of baseband modem **106**, receiver subsystems **RFA** and **RFB** of RF transceiver **104**, the at least one transmitter subsystem of RF transceiver **104**, and antenna **102** in order to support mobile communication operations for **SIM1** and **SIM2**. Each of RAT interfaces **RATA** and **RATB** may have a single RAT interface assume a master RAT role at any given time, where the remaining RATs (if any) may assume a slave RAT role. The master RAT may assume primary control of mobile communication resources while the slave RATs remain in a passive state. Depending on the status of mobile terminal **100**, the RAT interface assuming the master RAT role may change over time.

The respective master RAT interfaces of **RATA** and **RATB,** herein referred to as **RATA** master and **RATB** master, may thus oversee a variety of mobile communication operations of mobile terminal **100** according to the respective upper protocol stack and physical layers of each master RAT interface. In particular, one such operation may include radio measurements in which a master RAT (**RATA** master or **RATB** master) may measure one or more detectable cells on one or more target carrier frequencies. Such measurements may include receiving a communication signal and performing processing on the communication signal to measure a characteristic of the signal, including signal power, signal quality, or signal strength measurements. A master RAT may perform such measurements as a part of mobility procedures such as e.g. cell selection, cell reselection, handover, measurement reporting, network scan (e.g. Public Land Mobile Network Scan), which may be triggered according to various criteria designated by the respective RAT interface layers. Radio measurements may be either intra frequency measurements (measurements on the same carrier frequency as the current serving cell of the master RAT), inter-frequency measurements (measurements on different carrier frequencies from the carrier frequency of the current serving cell), or inter-RAT measurements (measurements on a different RAT). Such radio measurements may be performed when a master RAT is in both radio idle state and radio connected state, such as with measurement gaps (radio connected state) or a Discontinuous Reception (DRX) cycle (radio idle and connected state).

Each RAT interface may perform the radio measurements using certain digital processing circuits of the one or more baseband digital processing circuits **106a**. The specific type of radio measurements may vary depending on each the radio access technology of each RAT interface. For example, a GSM interface may perform Received Strength Signal Indicator (RSSI) measurements by processing received communication signals at a processing circuit in order to obtain one or more measurement values. A UMTS interface may perform Received Signal Code Power (RSCP), Energy per Chip over Noise (EcNo), and RSSI measurements by processing received communication signals at a processing circuit in order to obtain one or more measurement values. An LTE interface may perform Reference Signal Received Power (RSRP), Reference Signal Received Quality (RSRQ), and RSSI measurements by processing received communication signals at a processing circuit in order to obtain one or more measurement values. The measurements may include serving cell measurements, neighbor cell measurements, network scans (e.g. Public Land Mobile Network (PLMN) scans), and/or any other type of radio measurement in which a received signal is processed in order to measure a characteristic of the received signal. The radio measurements may include measurements in which a single cell is measured, such as by measuring a cell using a physical identity of a cell, or in which one or more carrier frequencies are measured, such as by detecting measuring multiple cells on one or more carrier frequencies.

The dual reception multi-SIM design (DR-DSDS, DSDA, etc.) of mobile terminal **100** may allow both **RATA** master and **RATB** master to perform radio measurements without interruption, i.e. without disturbance from the other RAT interface. However, in order to reduce power consumption and improve radio measurement speed, baseband modem **106** may coordinate radio measurements and share measurement results between RAT interfaces **RATA** and **RATB**, such as by using a measurement manager **MM** as shown in FIG. **2**. **RATA** and **RATB** may utilize **MM** in order to request and retrieve measurement results from one another as well as to coordinate radio measurement execution in order to effectively perform radio measurements in a synchronized manner.

Returning to the exemplary configuration introduced above, **SIMA** may be a multi-RAT SIM that supports LTE, UMTS, and GSM, while **SIMB** may be a GSM-only SIM. Accordingly, **RATA** may support LTE, UMTS, and GSM interfaces in various master-slave RAT roles while **RATB** may maintain a GSM interface in a master RAT role.

The master RAT interface for **RATB**, i.e. the **RATB** GSM master, may perform various intra- and inter-frequency measurements for GSM, which may be triggered and utilized for different mobility procedures. As **RATA** may support multiple RAT interfaces, **RATA** master may perform inter-RAT measurements in addition to intra- and inter-frequency measurements. Accordingly, in a scenario where the LTE interface has assumed the master role for **RATA** (i.e. **RATA** LTE master), the **RATA** LTE master may temporarily hand control of the receiver resources of mobile terminal **100** to either the **RATA** GSM slave and/or the **RATA** UMTS slave to allow the slave RAT interfaces to perform radio measurements or GSM or UMTS, respectively. The **RATA** GSM/UMTS slave may then perform the radio measurements and report back the resulting inter-RAT measurements to the **RATA** LTE master, which may use the inter-RAT measurements for mobility procedures, such as a potential inter-RAT reselection/handover (e.g. dependent on the inter-RAT measurements and any relevant serving cell measurements).

Accordingly, the intra- and inter-frequency measurements performed by the **RATB** GSM master may be relevant for the inter-RAT measurements performed by the **RATA** LTE master, in particular the GSM inter-RAT measurements obtained by the **RATA** LTE master by allotting control of receiver resources to the **RATA** GSM slave. Accordingly, **RATA** and **RATB** may share measurement results in order to reduce power consumption and improve radio measurement completion time.

For example, the **RATA** LTE master may trigger inter-RAT measurements, such as part of mobility procedures in either a radio connected state or radio idle state. The **RATA** LTE master may send an inter-RAT measurement request to the **RATA** GSM slave to perform the inter-RAT measurements and report the inter-RAT measurement results back to the **RATA** LTE master. The **RATA** GSM slave may have a first set of target carrier frequencies to measure during inter-RAT measurements as triggered by the **RATA** LTE master. Independently of the inter-RAT procedure of **RATA**, the **RATB** GSM master may additionally perform intra- and/or inter-frequency measurements in accordance with mobility procedures. Accordingly, the **RATB** GSM master may additionally have a second set of target carrier frequencies to measure during the intra- and/or inter-frequency measurements, where one or more target carrier frequencies are common to both the first and second sets of target carrier frequencies, i.e. common target carrier frequencies. Accordingly, as opposed to performing two separate radio measurements on each of the common target carrier frequencies (i.e. a first measurement by **RATA** GSM slave during inter-RAT measurements triggered by **RATA** LTE master and a second measurement by **RATB** GSM master during intra- and/or inter-frequency measurements), only one of **RATA** or **RATB** may perform the GSM radio measurements and provide the measurements results to the other of **RATA** and **RATB**.

Baseband modem **106** may therefore include measurement manager **MM**, which may interact with **RATA** and **RATB** as shown in FIG. **2** in order to coordinate radio measurements and share measurement results between **RATA** and **RATB**. Such sharing of measurements results may reduce power consumption and improve radio measurement speed.

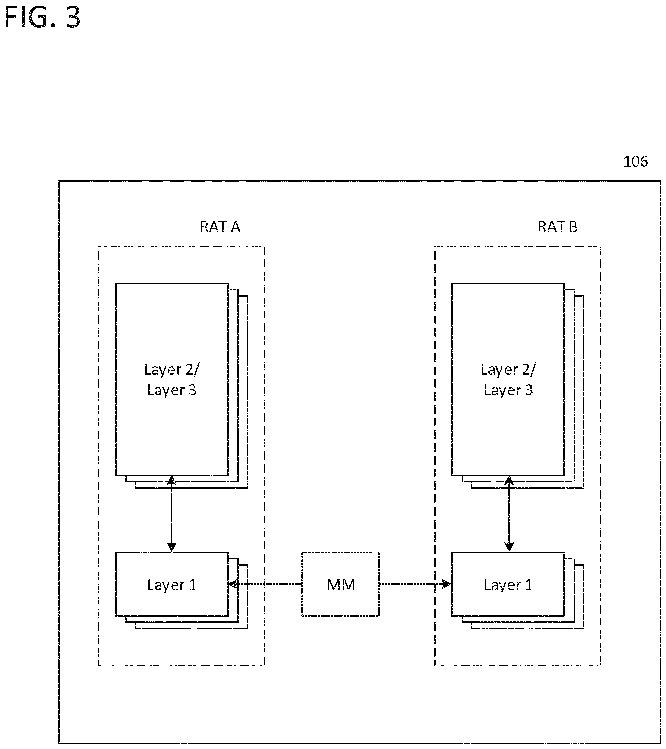

FIG. **3** shows a block diagram illustrating the layer architecture of the upper protocol stack and physical layers of RAT interfaces **RATA** and **RATB** in addition to measurement manager **MM**. As previously indicated, each of RAT interfaces **RATA** and **RATB** may be composed of the upper protocol stack (Layer 2 and Layer 3) and physical (Layer 1) layers of one or more RATs, e.g. depending on the RAT capabilities of **SIMA** and **SIMB**. It is appreciated that each of **RATA** and **RATB** may have a number of upper protocol stack and physical layer sets corresponding to the number of RATs supported by **SIMA** and **SIMB** respectively.

The upper protocol stack and physical layers for each of **RATA** and **RATB** may correspond to software modules executed on a processor (e.g. one or more control circuit of baseband digital processing circuit(s) **106a**) in addition to one or more digital processing circuits of baseband digital processing circuit(s) **106a** configured to perform signal processing operations. As shown in FIG. **3**, measurement manager **MM** may act as an interconnect between the respective physical layers of **RATA** and **RATB**. **MM** may thus similarly be structurally implemented as software, such as program code corresponding to a software module defining the operation of **MM**. **MM** may similarly be executed by a control circuit (or processor) of baseband digital processing circuit(s) **106a**, and may be configured to interact with the upper protocol stack and physical layers of each master and slave RAT of **RATA** and **RATB** in order to coordinate radio measurements and share measurement results.

Each of **RATA** and **RATB** may perform radio measurements at the physical layer, i.e. Layer 1 or "LI", and accordingly **MM** may be able to retrieve and provide relevant measurement results between the **RATA** L1 and **RATB** L1. It is appreciated that the L1s for the individual RATs of **RATA**, i.e. each of the master and slave RAT physical layers, may be implemented separately, i.e. stored and executed as separate software modules, and that **RATB** may have an analogous architecture. It is thus appreciated that **MM** may be connected to each available L1 layer for both of **RATA** and **RATB**, and accordingly may be able to coordinate and share radio measurements across multiple different RATs.

**MM** may thus be a software module configured to perform data organization procedures. For example, **MM** may be configured to access measurement results obtained from the respective master and slave RATs of **RATA** and **RATB**, and may be configured to identify the measurement target (such as cell identity or carrier frequency) that was measured to obtain the each measurement result. Such may include comparing identity information of a measurement target to each measurement target of a plurality of measurement results to identify matching measurement targets. **MM** may also be configured to retrieve certain measurement results, such as by retrieving certain measurement results that correspond to a measurement target of interest. **MM** may be configured to receive such measurement results from one or more layers of the master and slave RAT interfaces of **RATA** and **RATB**, and may be configured to provide retrieved measurement results to another layer of the master and slave RAT interfaces of **RATA** and **RATB**. Such data organization procedures are understood as conventional and will be appreciated by those of skill in the art.

The functionality of **MM** will now be described relative to several exemplary scenarios. Returning to the exemplary configuration introduced above, **SIMA** may support LTE, UMTS, and GSM, while **SIMB** may only support GSM. Accordingly, **RATA** may include LTE, UMTS, and GSM upper protocol stack and physical layers (discrete or unified with one another), while **RATB** may only include GSM upper protocol stack and physical layers. The LTE interface may assume the master RAT role for RAT interface **RATA** while the GSM and UMTS interfaces may assume slave RAT roles for each of the following exemplary scenarios. The GSM interface may assume the master RAT role for RAT interface **RATB**.

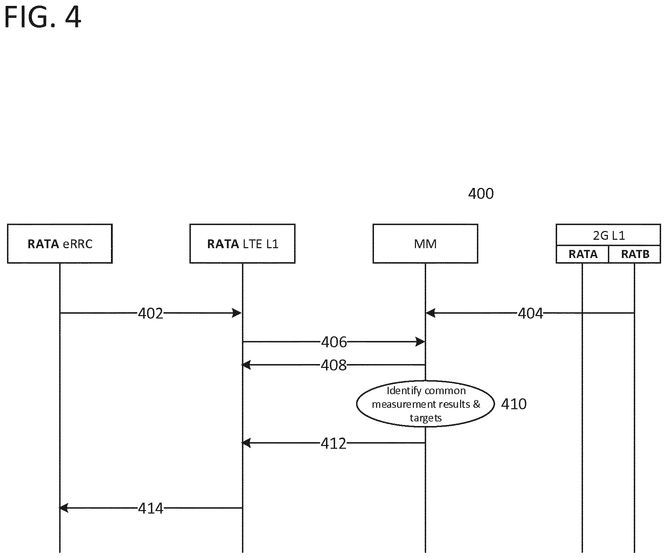

FIG. **4** shows message sequence chart **400** illustrating the operation of **MM**. In the exemplary scenario of message sequence chart **400**, **RATA** LTE master may trigger inter-RAT measurements. Accordingly, the evolved Radio Resource Control (eRRC) entity of the Layer 3 protocol stack layer of the **RATA** LTE master (**RATA** LTE eRRC) may transmit an inter-RAT measurement request **402** to the Layer 1 physical layer of the **RATA** LTE master (**RATA** LTE L1). Inter-RAT measurement request **402** may request inter-RAT measurements be performed for GSM. In a conventional scenario, **RATA** LTE L1 may signal the **RATA** GSM slave (e.g. **RATA** GSM Layer 1) to perform radio measurements. However, **RATA** LTE L1 may instead transmit radio measurement request **406** to measurement manager **MM**. Radio measurement request **406** may contain a first set of measurement targets, which may include one or more GSM carrier frequencies and/or one or more specific GSM cells (e.g. as identified by cell identification information) for which radio measurements are desired.

Upon receipt of the inter-RAT measurement request **406**, **MM** may transmit an initial confirmation **408** to **RATA** LTE L1 indicating confirmation of measurement request **406**. **MM** may then determine whether any measurement results for the first set of measurement targets are available. Specifically, **MM** may determine whether **RATB** GSM L1 has previously performed radio measurement on any of the first set of measurement targets.

**RATB** GSM L1 may have previously performed radio measurements on a second set of measurement targets, which may include one or more GSM carrier frequencies and/or one or more specific GSM cells (e.g. as identified by cell identification information). For example, **RATB** GSM L1 may have previously performed intra- and/or inter-frequency measurements on each of the GSM carrier frequencies and/or specific GSM cells of the second set of measurement targets, such as according to e.g. a DRX cycle measurement pattern (as will be later detailed). Accordingly, **RATB** GSM L1 may have previously transmitted a measurement report **404** containing measurement results for the second set of measurement targets to **MM**.

**MM** may then compare the first set of measurement targets of **406** to the second set of measurement targets of **404** (or e.g. the measurement targets corresponding to the measurement results provided in **404**) to identify if any common measurement targets exist at **410**, i.e. if any measurement targets are included in both the first and second sets of measurement targets.

After identifying any common measurement targets based on **404** and **406** at **410**, **MM** may identify any corresponding common measurement results at **410**, which may each be e.g. radio measurements identifying a received signal characteristic of a given GSM cell such as e.g. signal power, signal quality, or a signal strength indicator. **MM** may then transmit a measurement report **412** containing any corresponding common measurement results to **RATA** LTE L1.

In the exemplary scenario of message sequence chart **400**, each of the first set of measurement targets requested in **406** may be included in the second set of measurement targets reported in **404**, i.e. each of the first measurement targets may be a common measurement target. Accordingly, **MM** may provide a measurement report **412** that contains measurement results for each of the first set of measurement targets. **RATA** LTE L1 may thus receive measurement report **412** and transmit inter-RAT measurement report **414** to **RATA** LTE eRRC containing the inter-RAT measurements for GSM. As the first set of measurement targets were included in the second set of measurement targets, **RATA** LTE L1 may not need to hand control to **RATA** GSM L1 (**RATA** GSM slave) to perform the inter-RAT measurements. All reception resources for **RATA**, including **RATA** GSM, **RATA** UMTS, and **RATA** LTE, at baseband modem **106** may thus remain in inactive as opposed to becoming activated to perform the inter-RAT measurements, thus conserving power. Additionally, **RATA** GSM reception resources may not have to perform any reception or processing of wireless signals, which may be a time-consuming procedure. In contrast, measurement results for the first set of measurement targets may already be available. Accordingly, radio measurement completion time may be reduced, which may accelerate mobility procedures. For example, **RATA** may be able to perform any necessary inter-RAT cell reselection/handover (e.g. from LTE to GSM) at an earlier point in time due to the expedited receipt of the inter-RAT measurements.

It is appreciated that alternative architectures are additionally possible. For example, **MM** may locally store the actual measurement results provided by e.g. **RATB** GSM L1 and subsequently provide the actual measurement results to e.g. **RATA** LTE L1 upon request. Alternatively, **RATB** GSM L1 may transmit a measurement report **404** that only contains the carrier frequency and/or cell identify information of each measured cell for which **RATB** GSM L1 obtained a measurement result for. In the event that **MM** receives a measurement request **406** from e.g. **RATA** LTE L1, **MM** may compare the measurement targets of **406** to the reported carrier frequency and/or cell identity information of **404** to identify any common measurement targets. If **MM** identifies common measurement targets, **MM** may then retrieve the measurement results for the common measurement targets from e.g. **RATB** GSM L1, which may e.g. involve another bi-directional signaling involving a measurement result request from **MM** to e.g. **RATB** GSM L1 and a connected measurement report from e.g. **RATB** GSM L1 to **MM** containing common measurement results. Alternatively, baseband modem **106** may provide a unified physical layer, which may be shared between one or more L1s of **RATA** and **RATB** and allow for a substantially direct connection between e.g. **RATA** LTE L1 and **RATB** GSM L1 to exchange measurement results. Accordingly, **MM** may assume a supervisory role involving the direct interconnect between e.g. **RATA** LTE L1 and **RATB** GSM L1.

**MM** may also include a validity check to ensure that measurement results provided by e.g. **RATB** GSM L1 remain valid. For example, **MM** may assign each measurement result reported by e.g. **RATB** GSM L1 a validity time, and may only provide such measurement results to e.g. **RATA** GSM L1 if the measurement results remain valid according to the validity time. Such may ensure that mobility of mobile terminal **102** may not significantly affect the accuracy of shared measurement results.

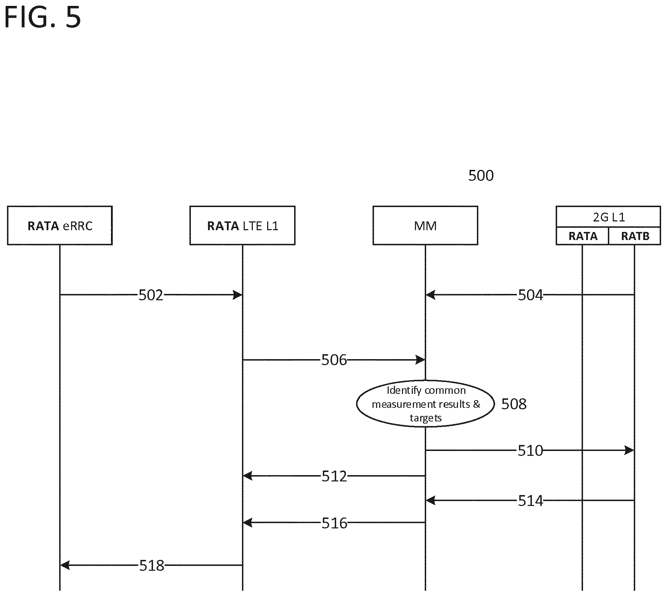

Depending on the measurement configuration of **RATB** GSM L1, some, all, or none of the first set of measurement targets requested by **RATA** LTE L1 may be common measurement targets to the second set of measurement targets reported by **RATB** GSM L1. Accordingly, FIG. **5** shows message sequence chart **500** illustrating the operation of **MM** in another exemplary scenario. Similarly to the exemplary scenario of message sequence chart **400**, **RATA** LTE master may trigger inter-RAT measurements. Accordingly, the **RATA** LTE RRC may transmit an inter-RAT measurement request **502** to **RATA** LTE L1. **RATA** LTE L1 may transmit radio measurement request **506** to **MM**, which may include a first set of measurement targets including one or more GSM carrier frequencies and/or one or more specific GSM cells for which radio measurements are desired.

Upon receipt of radio measurement request **506**, **MM** may determine whether any measurement results for the first set of measurement targets are available. Specifically, **MM** may determine whether **RATB** GSM L1 has previously reported radio measurements for any of the first set of measurement targets.

Similarly to the exemplary scenario of message sequence chart **400**, **RATB** GSM L1 may have previously performed a radio measurements on a second set of measurement targets, which may include one or more GSM carrier frequencies and/or one or more specific GSM cells. Accordingly, **RATB** GSM L1 may have previously transmitted a measurement report **504** containing measurement results for the second set of measurement targets to **MM**.

**MM** may then compare the first set of measurement targets of **506** to the second set of measurement targets of **504** (or e.g. the measurement targets corresponding to the measurement results provided in **504**) to identify if any common measurement targets exist at **510**, i.e. if any measurement targets are included in both the first and second sets of measurement targets. **MM** may also identify any measurement results for the common measurement targets, such as measurement results provided in **504** (or indicated as being present at **RATB** GSM L1 by **504**).

However, in contrast to the exemplary scenario of message sequence chart **400**, only part of the first set of measurement targets requested in **506** may be common measurement targets, i.e. may be measurement targets of the second set of measurement targets reported by **RATB** GSM L1 in **504**. Accordingly, **MM** may transmit a radio measurement request **510** to **RATB** GSM L1 specifying the remaining measurement targets, i.e. the measurement targets of the first set of measurement targets that were not included in the second set of measurement targets. **MM** may also transmit confirmation **512** to **RATA** LTE L1 indicating confirmation of radio measurement request **506**.

**RATB** GSM L1 may then perform radio measurement on the remaining measurement targets specified by **MM** in **510**. **RATB** GSM L1 may then provide measurement results for the remaining measurement targets to **MM** in measurement report **514**. **MM** may then aggregate the measurement results for the common measurement targets (initially provided by **RATB** GSM L1 in **504**) and the measurement results for the remaining measurement targets (provided by **RATB** GSM L1 in **514**) and transmit measurement report **516** containing measurement results for all of the first set of measurement targets (composed of the common measurement targets and the remaining measurement targets) to **RATA** LTE L1. **RATA** LTE L1 may then transmit inter-RAT measurement report **518** to **RATA** LTE eRRC containing measurement results for the first set of measurement targets.

Similarly to the exemplary scenario of message sequence chart **400**, the operation of **MM** may allow **RATA** to avoid performing inter-RAT measurements, such as by granting **RATA** GSM slave temporary control of reception resources, which may result in excessive power consumption and require additional reception and processing time to perform the connected inter-RAT measurements. Similarly, as opposed to initiating inter-RAT measurements by **RATA** GSM L1 on the remaining measurement targets (e.g. upon determination by **MM** with **504** and **506** that one or more of the first set of measurement targets requested by **RATA** LTE L1 are not included in the second set of measurement targets reported by **RATB** 2G L1), **MM** may instead instruct **RATB** GSM L1 to perform radio measurement on the remaining measurement targets. **RATA** GSM L1 may accordingly remain inactive, thus conserving power. The remaining master RAT interfaces for **RATA** including **RATA** LTE and **RATA** UMTS may additionally be inactive. Furthermore, measurement results for the common measurement targets may already be available via **RATB** GSM L1 at **504**, thus reducing the amount of time needed to acquire measurement results for all of the first set of measurement targets at **RATA** LTE eRRC. Mobility procedures may thus be accelerated.

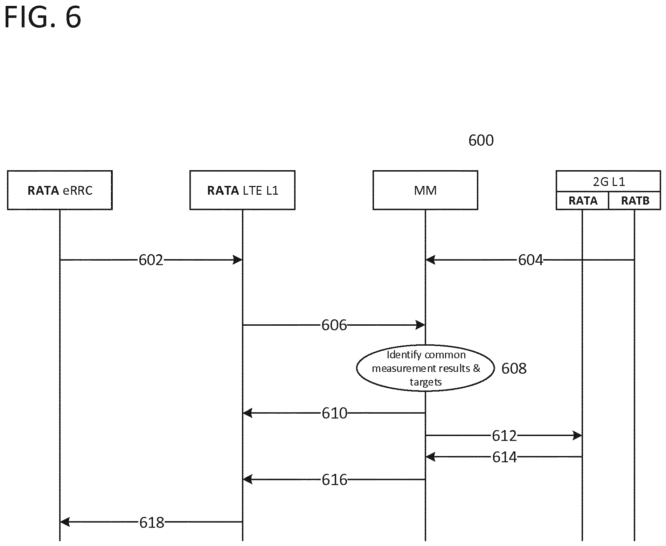

FIG. **6** shows message sequence chart **600** illustrating the operation of **MM** in another exemplary scenario. Similarly to the exemplary scenarios of message sequence charts **400** and **500**, **RATA** LTE eRRC may trigger inter-RAT measurements by transmitting inter-RAT measurement request **602** to **RATA** LTE L1. **RATA** LTE L1 may then transmit radio measurement request **606** to **MM**, which may include a first set of measurement targets including one or more GSM carrier frequencies and/or one or more specific GSM cells for which radio measurements are desired.

**MM** may then determine whether any measurement results for the first set of measurement targets are available at **608**, such as whether **RATB** GSM L1 has previously reported radio measurements for any of the first set of measurement targets. **MM** may thus compare the first set of measurement targets of **606** to the second set of measurement targets reported in **604** to identify if any common measurement targets exist at **608**.

However, **RATB** GSM L1 may not currently be performing any radio measurements. For example, **RATB** GSM L1 may not currently have a DRX cycle configured (and/or e.g. any previously measurement results reported by **RATB** GSM L1 are invalid as will be detailed). Alternatively, **RATB** GSM L1 may be at the start of a DRX cycle, and accordingly may not be available to perform any radio measurements.

As **RATB** GSM L1 is not available to perform any radio measurements, **MM** may not be able to provide **RATA** LTE L1 with any measurement results for the first set of measurement targets. **MM** may then transmit confirmation **610** to **RATA** LTE L1 indicating the status of radio measurement request **606**.

Accordingly, **MM** may transmit measurement request **612** to **RATA** GSM L1 (**RATA** GSM slave) to perform radio measurements for the first set of measurement targets. **RATA** GSM L1 may thus utilize a measurement gap or DRX cycle provided by **RATA** LTE L1 (**RATA** LTE master) to perform the intra-RAT measurements for the first set of measurement targets. **RATA** GSM L1 may provide the measurement results for the first set of measurement targets to **MM** as measurement report **614**, which may provide the measurement results to **RATA** LTE L1 as measurement report **616**. **RATA** LTE L1 may then provide the measurement results for the first set of measurement targets to **RATA** LTE eRRC as inter-RAT measurement report **618**. Alternatively, **RATA** GSM L1 may provide the measurements results for the first set of measurement targets directly to **RATA** LTE L1 (i.e. not via **MM**) or directly to **RATA** LTE eRRC, e.g. through an existing upper protocol stack and physical layer interconnect.

Measurement manager **MM** may be implemented in numerous alternative manners. For example, instead of providing an interconnect between **RATA** LTE L1 and **RATB** GSM L1 as detailed regarding FIGs. **4-6**, **MM** may alternatively act as an interconnect between **RATA** GSM L1 and **RATB** GSM L1. Further alternative manners are additionally recognized as possible.

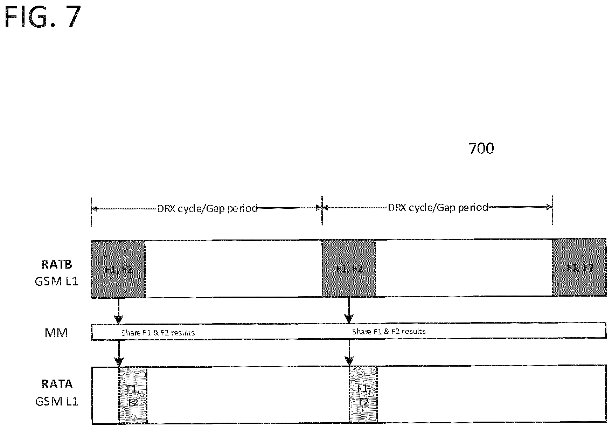

FIG. **7** shows timing chart **700** illustrating such an example in which **MM** may act as interconnect between **RATA** GSM L1 and **RATB** GSM L1. In the scenario of timing chart **700**, **RATB** GSM L1 may be configured to perform intra- and/or inter-frequency measurements according to a Discontinuous Reception (DRX) cycle or measurement gap configuration. Accordingly, **RATB** GSM L1 may be configured to perform intra- and/or inter-frequency measurements according to a periodic schedule, such as a measurement gap configuration or DRX cycle provided by the mobile communication network. **RATB** GSM L1 may therefore perform radio measurements on a second set of measurement targets according to a set periodic schedule. As shown in FIG. **7**, **RATB** GSM L1 may thus periodically obtain measurement results for at least carrier frequencies **F1** and **F2**, i.e. **F1** and **F2** are measurement targets of the second set of measurement targets of **RATB** GSM L1.

Concurrently, **RATA** LTE master may trigger inter-RAT measurements. **RATA** LTE eRRC may thus transmit an inter-RAT measurement request to **RATA** LTE L1, which may then hand over control of reception resources to **RATA** GSM L1 to obtain and provide measurement results for a first set of measurement targets.

The first set of measurement targets be e.g. **F1** and **F2**, i.e. **RATA** GSM L1 may need to obtain measurement results for **F1** and **F2**. As previously detailed, **RATB** GSM L1 may be configured to periodically obtain measurement results for **F1** and **F2** according to the assigned DRX cycle or measurement gap configuration.

Accordingly, **MM** may configure **RATB** GSM L1 to provide measurement results for **F1** and **F2**, i.e. the first set of measurement targets, when available at **RATB** GSM L1. Accordingly, **RATB** GSM L1 may obtain measurement result for **F1** and **F2** during each DRX cycle or measurement gap period and provide the measurement results for **F1** and **F2** to **MM**. As shown in FIG. **7**, **MM** may then provide the measurement results to **RATA** GSM L1. **RATA** GSM L1 may then report the measurement results for **F1** and **F2** to **RATA** LTE L1 which may then provide the measurement results to **RATA** LTE eRRC, thus completing the inter-RAT measurement procedure.

Additionally, **RATA** LTE eRRC may request the inter-RAT measurements for **F1** and **F2** as part of a DRX cycle or measurement gap configuration, i.e. **RATA** LTE eRRC may periodically request the inter-RAT measurements for **F1** and **F2** according to a DRX cycle or measurement gap period. Accordingly, **MM** may continue to provide the periodically obtained **F1** and **F2** measurements from **RATB** GSM L1 to **RATA** GSM L1. **RATA** GSM L1 may therefore continuously receive periodic **F1** and **F2** measurements obtained by **RATB** GSM L1, thus eliminating the need for **RATA** GSM L1 to perform radio measurements.

Accordingly, **MM** may act as an interconnect between **RATA** GSM L1 and **RATB** GSM L1 to facilitate measurement result sharing. Additionally, **MM** may organize for periodic measurement result sharing between **RATA** and **RATB** e.g. in accordance with a DRX cycle or measurement gap configuration.

In the exemplary scenario detailed regarding timing chart **700**, **RATB** GSM L1 may be configured to perform radio measurements on each of **F1** and **F2**, i.e. the first set of measurement targets (targeted by **RATA** GSM L1) may be common measurement targets to the second set of measurement targets (targeted by **RATB** GSM L1). **MM** may therefore periodically retrieve measurement results for the first set of measurement targets from **RATB** GSM L1 and provide the measurement results to **RATS** GSM L1.

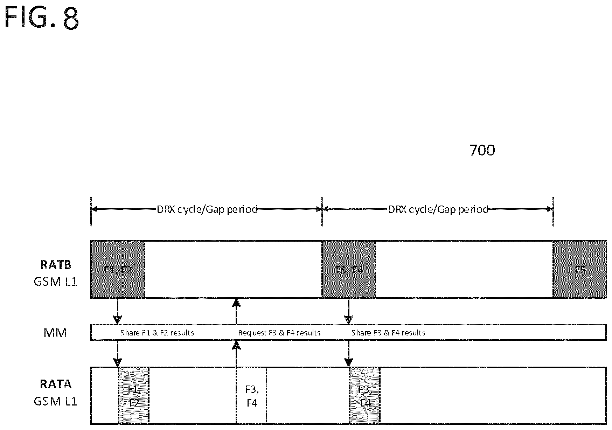

Such may not necessarily hold in all use cases. For example, FIG. 8 shows timing chart **800** illustrating such a scenario where only some of the first set of measurement targets may be common measurement targets.

In the exemplary scenario of timing chart **800**, **RATA** LTE eRRC may similarly request inter-RAT measurements to **RATA** LTE L1. **RATA** GSM L1 may therefore be requested to perform radio measurements on a first set of measurement targets, e.g. carrier frequencies **F1**, **F2**, **F3**, and **F4**.

Similarly to the exemplary scenario of timing chart **700**, **RATB** GSM L1 may be configured to perform intra- and/or inter-frequency measurements according to a DRX cycle or measurement gap configuration on a second set of measurement targets, e.g. **F1**, **F2**, and **F5**. Accordingly, **RATB** GSM L1 may periodically obtain measurement results for **F1**, **F2**, and **F5** according to the DRX cycle or measurement gap period.

**MM** may therefore retrieve the measurement results for **F1** and **F2** from **RATB** GSM L1 and provide the measurement results to **RATA** GSM L1 as measurement results for common measurement targets. **RATA** GSM L1 may therefore obtain measurement results for **F1** and **F2** without having to perform radio measurement.

However, **RATB** GSM L1 may not be initially configured to provide measurement results for **F3** and **F4** to **RATA** GSM L1 via **MM** as **F3** and **F4** may not be common measurement targets. Accordingly, **MM** may identify **F3** and **F4** as remaining measurement targets, i.e. measurement targets of the first set of measurement targets that are not common measurement targets, such as by receiving a request from **RATA** GSM L1. **MM** may then request measurement results for **F3** and **F4** from **RATB** GSM L1.

As previously indicated, **RATB** GSM L1 may not be initially configured to perform radio measurements on **F3** and **F3** as **F3** and **F4** are not part of the second set of measurement targets. However, upon receipt of the request from **MM**, **RATB** GSM L1 may configure **F3** and **F4** as part of the measurement targets. As shown in FIG. **7**, **RATB** GSM L1 may perform a radio measurement on **F3** and **F4**, such as by adding **F3** and **F4** to the scheduled radio measurements of the DRX cycle or measurement gap configuration. **RATB** GSM L1 may then provide measurement results for **F3** and **F4** to **MM**, which may then provide the measurement results for **F3** and **F4** to **RATA** GSM L1. Accordingly, **RATA** GSM L1 may obtain measurement results for **F1**, **F2**, **F3**, and **F4** (i.e. the first set of measurement results) without having to perform any radio measurements. **RATA** GSM L1 may then provide the measurement results to **RATA** LTE L1 which may then provide the measurement results to **RATB** LTE L1. Baseband modem **106** and RF transceiver **104** may thus reduce power consumption by avoiding extra radio measurements. Additionally, radio measurement completion time may be reduced.

The benefits of applying **MM** in the exemplary scenario of timing chart **800** may be dependent on the position of **RATB** GSM L1 within the DRX cycle or measurement gap period. For example, if **RATA** GSM L1 requests measurement results for **F3** and **F4** near the end of the DRX cycle or measurement gap period of **RATB** GSM L1, there may not exist a large latency time until **RATB** GSM L1 can perform the intra- and/or inter-frequency measurements in accordance with the configured DRX cycle or measurement gap pattern. Accordingly, **RATA** GSM L1 may not have to delay for a long period of time before receiving the requested measurement results, thus yielding greater benefits in radio measurement completion time.

However, if **RATB** GSM L1 is at the start of the DRX cycle or measurement gap pattern when **RATA** GSM L1 request the radio measurements via **MM**, there may exist a long delay before **RATB** GSM L1 is able to perform the requested radio measurements in accordance with the configured DRX cycle or measurement gap pattern. Accordingly, radio measurement completion time may be extended if **RATA** GSM L1 waits for **RATB** GSM L1 to provide the radio measurements. A similar scenario may occur when **RATA** GSM L1 requests radio measurements when **RATB** GSM L1 has not started the DRX cycle or measurement gap pattern.

Accordingly, **MM** may not request and wait for measurement results for remaining measurement targets from **RATB** GSM L1 when **RATB** GSM L1 has not started the DRX cycle or measurement gap pattern or is at the start of the DRX cycle or measurement gap pattern. Instead, **MM** may direct **RATA** GSM L1 to perform the radio measurements for the remaining measurement targets as opposed to relying on **RATB** GSM L1 to perform the radio measurements. Accordingly, **RATB** GSM L1 may initially provide **MM** with scheduling information for the DRX cycle or measurement gap pattern. **MM** may then determine whether **RATB** GSM L1 is at the start of or has not started the DRX cycle or measurement gap pattern and either provide radio measurements to **RATA** GSM L1 from **RATB** GSM L1 following a delay or instruct **RATA** GSM L1 to perform the radio measurements.

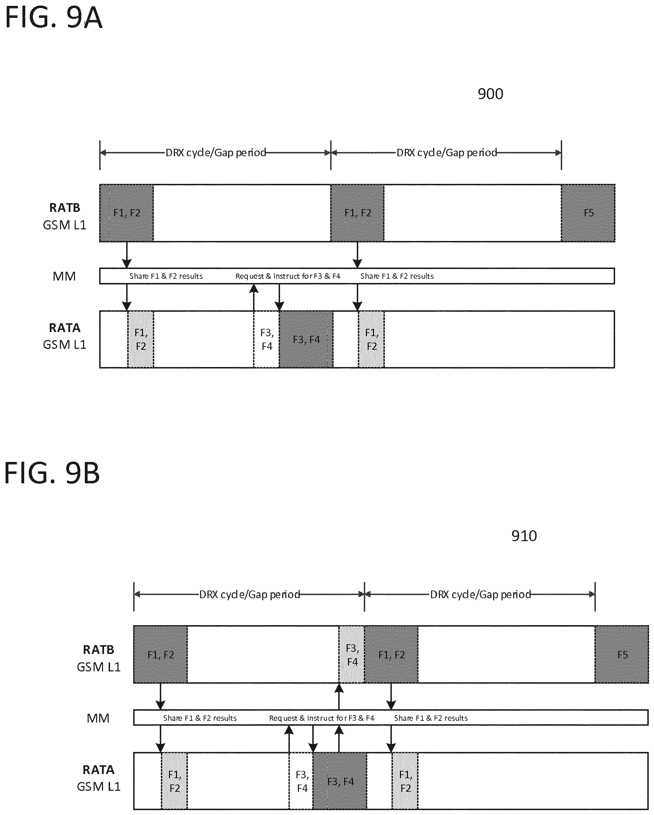

FIG. **9A** shows timing chart **900** illustrating an exemplary scenario in which **RATB** GSM L1 is at the start of or has not started the DRX cycle or measurement gap pattern. Similarly to the exemplary scenario of timing chart **800**, **MM** may request and provide measurement results for **F1** and **F2** (i.e. common measurement targets) from **RATB** GSM L1 to **RATA** GSM L1.

**RATA** GSM L1 may then additionally request measurement results for **F3** and **F4**, i.e. the remaining measurement targets of the first set of measurement targets, e.g. by requesting from **MM**. However, **MM** may determine that **RATB** GSM L1 is at the start of or has not started the DRX cycle or measurement gap pattern. For example, **RATB** GSM L1 may provide **MM** with scheduling information indicating the DRX cycle or measurement gap configuration. Accordingly, **MM** may determine that the latency in waiting for **RATB** GSM L1 to be available to perform the radio measurements is excessive. Accordingly, **MM** may instruct **RATA** GSM L1 to perform the radio measurements on **F3** and **F4**. Accordingly, **RATA** GSM L1 may perform the requisite radio measurements on **F3** and **F4**, thus obtaining measurement results for all of the first set of measurement targets.

FIG. **9B** shows timing chart **910** illustrating a variation on the exemplary scenario of timing chart **900**. In the exemplary scenario of timing chart **910**, the first set of measurement targets may be **F1**, **F2**, **F3**, and **F4**, while the second set of measurement targets may be **F1**, **F2**, **F3**, **F4**, and **F5**.

Similarly to the exemplary scenario of timing chart **900**, **MM** may provide **RATA** GSM L1 with measurement results for **F1** and **F2** from **RATB** GSM L1 upon availability pending the DRX cycle or measurement gap pattern of **RATB** GM L1. **RATA** GSM L1 may also request measurement results for **F3** and **F4** from **MM**. As **F3** and **F4** are also measurement targets of the second set of measurement targets, **RATB** GSM L1 may be scheduled to perform radio measurement for **F3** and **F4**. However, **MM** may determine that **RATB** is at the start of or has not started the DRX cycle or measurement gap pattern, and thus is not available to provide the radio measurements for **F3** and **F3** without an excessive delay.

Accordingly, **MM** may instruct **RATA** GSM L1 to perform the radio measurements for **F3** and **F4** and provide the radio measurements for **F3** and **F4** to **MM**. As **F3** and **F4** are also included in the second set of measurement targets, **MM** may then provide the radio measurements for **F3** and **F4** to **RATB** GSM L1. Accordingly, **RATB** GSM L1 may not need to perform radio measurements on **F3** and **F4** at a later time, and may instead utilize the measurement results for **F3** and **F4** provided by **RATA** GSM L1. Such may similarly reduce power consumption and improve radio measurement speed.

It is appreciated that the periodicity of DRX cycles and measurement gap configurations may allow for **RATA** and **RATB** to repeatedly share measurement results via **MM** e.g. according to the specific periods for each.

The preceding exemplary scenarios have been directed towards utilizing intra- and/or inter-frequency measurements for a first RAT interface as intra-RAT measurements for a second RAT interface, e.g. where the master RAT of the first RAT interface is different than the master RAT of the second RAT interface. However, it is appreciated that **MM** may similarly operate in order to share intra- and/or inter-frequency measurements between master RATs that are equivalent.

For example, **SIMA** and **SIMB** may instead each be configured to support LTE, UMTS, and GSM. In an exemplary scenario, the respective LTE interfaces of both **RATA** and **RATB** may assume the master RAT role, with UMTS and GSM assuming slave roles in both **RATA** and **RATB**.

**RATA** LTE master and **RATB** LTE master may initiate intra- and/or inter-frequency measurements e.g. during mobility procedures, where **RATA** LTE master may target a first set of measurement targets for radio measurement and **RATB** LTE master may target a second set of measurement targets for radio measurement. Similarly to as detailed above, **RATA** LTE master may send a radio measurement request to **MM** specifying the first set of measurement targets. **MM** may determine whether any measurement results for the first set of measurement targets are available, such as whether **RATB** LTE master has previously obtained and provided measurement results for any of the first set of measurement targets. If **RATB** LTE master has previously provided **MM** measurement results for any of the first set of measurement targets, e.g. by performing radio measurements on one or more common measurement targets of the second set of measurement targets, **MM** may provide **RATA** LTE master with the measurement results for the common measurement targets. **MM** may also determine whether any remaining measurement targets exist, i.e. whether any of the first set of measurement targets are not included in the second set of measurement targets. If so, **MM** may determine whether **RATB** LTE master is available to perform further radio measurements. If **RATB** LTE master is e.g. at the start of or has not started the DRX cycle or measurement gap period, **MM** may determine that **RATB** LTE master is unavailable for further measurements and may instruct **RATA** LTE master to perform the radio measurements on the remaining measurement targets. Alternatively, if **RATB** LTE master is available, **MM** may request that **RATB** LTE master perform radio measurements for the remaining measurement targets and provide any measurement results back to **MM**. Upon receipt thereof, **MM** may provide the measurement results for the remaining measurement targets back to **RATA** LTE master. **RATA** LTE master may thus not need to perform any radio measurement to obtain measurement results for the first set of measurement targets, and accordingly may reduce power consumption and improve radio measurement speed. It is appreciate that **MM** may act as an interconnect between certain layers of RAT interfaces **RATA** and **RATB** in such a scenario, such as between **RATA** LTE L1 and **RATB** LTE L1 or **RATA** LTE eRRC and **RATB** LTE eRRC.

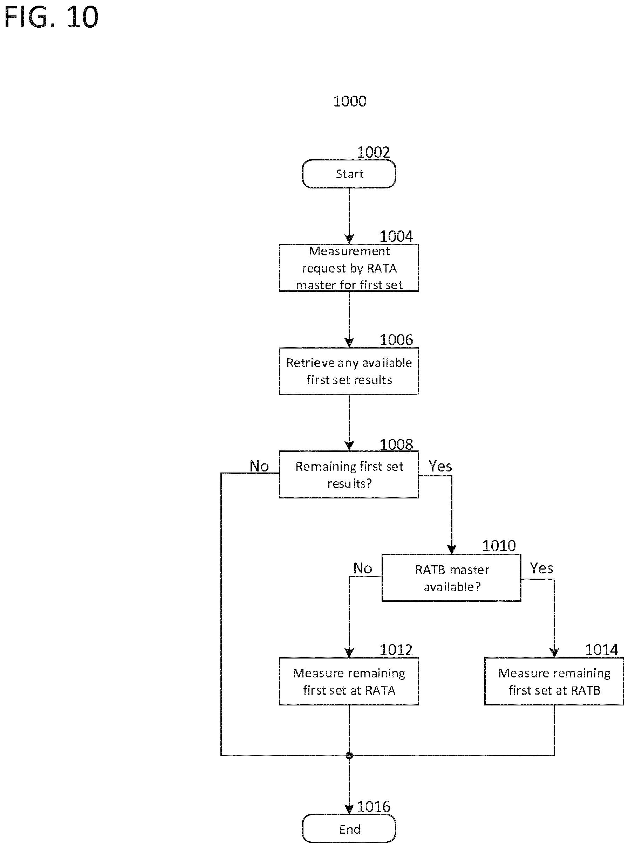

FIG. **10** shows a flow chart illustrating method **1000** further detailing the operation of baseband modem **106** of mobile terminal **100**. As previously detailed regarding FIGs. **2** and **3**, RAT interfaces **RATA** and **RATB** may be implemented in baseband modem **106**, such as by executing software modules corresponding to the upper protocol stack and physical layers at one or more processors (e.g. of digital processing circuit(s) **106a**) in order to control operation of baseband modem **106**. Similarly, **MM** may be implemented in baseband modem **106** by executing a software module corresponding to **MM** in order to interact with RAT interfaces **RATA** and **RATB** to coordinate radio measurements and share measurement results.

After initiating in **1002**, **RATA** master (e.g. any of a LTE, UMTS, or GSM interface) may trigger a radio measurement in **1004** e.g. as part of mobility procedures. **RATA** master may send a radio measurement request to **MM**, which may indicate a first set of measurement targets for which **RATA** is targeting for measurement. In **1006**. **MM** may receive the radio measurement request and retrieve any measurement results for the first set of measurement targets in **1006**, such as by determining whether **RATB** master has previously provided or previously obtained any measurement results for the first set of measurement targets, i.e. as one more measurement results of the first set of measurement targets are common measurement targets with a second set of measurement targets of **RATB** master. **MM** may provide any available measurement results for the first set of measurement targets to **RATA** master, i.e. as measurement results for common measurement targets.

**MM** may then determine whether any remaining measurement targets exist in **1008**. If no remaining measurement targets exist, method **1000** may terminate at **1016** as **RATA** master has obtained measurement results for all of the first set of measurement targets.

Alternatively, if remaining measurement targets exist, **MM** may determine in **1010** whether **RATB** master is available to perform further radio measurements, such as by determining whether **RATB** master is at the start of or has not yet started a DRX cycle or measurement gap pattern. If **RATB** master is not available, **MM** may instruct **RATA** master to perform the radio measurements at **1012**. **RATA** master may therefore obtain the measurements without assistance from **RATB** master and method **1000** may terminate at **1016.** If **RATB** master is available to perform radio measurements, **MM** may instruct **RATB** master to perform radio measurements for the remaining measurement targets in **1014**. **MM** may then receive measurement results for the remaining measurement targets from **RATB** master and provide the measurement results to **RATA** master. Method **1000** may then terminate at **1016**.

Accordingly, **RATA** may be able to obtain measurement results (e.g. intra-frequency, inter-frequency, and/or inter-RAT) without having to perform the radio measurements at either **RATA** master or a **RATA** slave, thus reducing power consumption and improving radio measurement speed. It is appreciated that the implementations detailed herein are applicable to sharing any type of radio measurement between two RAT interfaces, including intra-frequency, inter-frequency, and inter-RAT, such as by identifying any common measurement targets between **RATA** and **RATB** and sharing measurement results for the common measurement targets from one of **RATA** and **RATB** to the other.

While the above description may focus on sharing between the RAT interfaces for two SIMs, e.g. **SIMA** and **SIMB**, it is appreciated that the operations and devices detailed herein may similarly be applied to more than two SIMs. For example, **MM** may be configured to interact with **SIMA**, **SIMB**, and a third SIM **SIMC**, where **MM** may receive radio measurement requests from any one of **RATA**, **RATB**, or a third RAT interface corresponding to **SIMC** (i.e. the upper protocol stack and physical layers of each master and slave RAT of **SIMC**), and identify any common measurement targets and results with the other RAT interfaces. It is appreciated that the further functionality of **MM** detailed above may similarly be applied.

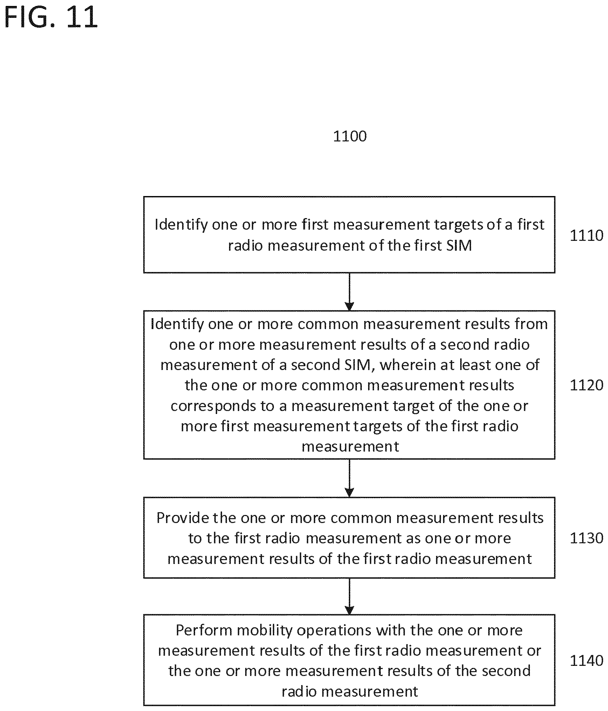

FIG. **11** shows method **1100** for performing radio measurements of a first SIM. Method **1100** may include identifying one or more first measurement targets of a first radio measurement of the first SIM (**1110**), identifying one or more common measurement results from one or more measurement results of a second radio measurement for a second SIM

(**1120**), wherein at least one of the one or more common measurement results corresponds to a measurement target of the one or more first measurement targets of the first radio measurement, providing the one or more common measurement results to the first radio measurement as one or more measurement results of the first radio measurement (**1130**), and performing mobility operations with the one or more measurement results of the first radio measurement or the one or more measurement results of the second radio measurement (**1140**).

In one or more further exemplary aspects of the disclosure, one or more of the features described above in reference to FIGS. **1-10** may be further incorporated into method **1100**. In particular, method **1100** may be configured to perform further and/or alternate processes as detailed regarding mobile terminal **100** and/or baseband modem **106**.

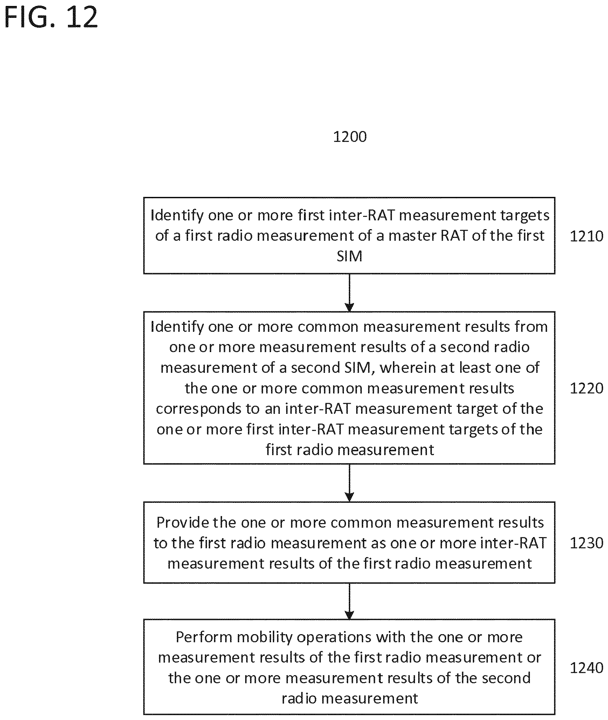

FIG. **12** shows method **1200** for performing radio measurements of a first SIM. Method **1200** may include identifying one or more inter-RAT first measurement targets of a first radio measurement of a master RAT of the first SIM (**1210**), identifying one or more common measurement results from one or more measurement results of a second radio measurement of a second SIM (**1220**), wherein at least one of the one or more common measurement results corresponds to an inter-RAT measurement target of the one or more first measurement targets of the first radio measurement, providing the one or more common measurement results to the first radio measurement as one or more inter-RAT measurement results of the first radio measurement (**1230**), and performing mobility operations with the one or more measurement results of the first radio measurement or the one or more measurement results of the second radio measurement **1240**.

In one or more further exemplary aspects of the disclosure, one or more of the features described above in reference to FIGS. **1-10** may be further incorporated into method **1200**. In particular, method **1100** may be configured to perform further and/or alternate processes as detailed regarding mobile terminal **100** and/or baseband modem **106**.

It is appreciated that the terms "user equipment", "UE", "mobile terminal", etc., may apply to any wireless communication device, including cellular phones, tablets, laptops, personal computers, and any number of additional electronic devices capable of wireless communications.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include a one or more components configured to perform each aspect of the related method.

All acronyms and above abbreviations defined in the above description additionally hold in all claims included herein.

## Claims

1. A mobile terminal (100) device comprising a first subscriber identity module, SIM, (SIMA), a second SIM (SIMB), a radio processing circuit (104) and a baseband processing circuit (106) configured to interact with the radio processing circuit (104), the baseband processing circuit configured to:
identify one or more first inter-radio access technology, inter-RAT, measurement targets of a
first radio measurement of a master RAT of the first SIM (SIMA);
obtain one or more previously reported measurement results for one or more second inter-RAT measurement targets of a second radio measurement of the second SIM (SIMB) measured prior to identifying the one or more first inter-RAT measurement targets of the first radio measurement of the first SIM (SIMA);
compare the one or more first inter-RAT measurement targets of the first radio measurement of the first SIM (SIMA) to the one or more second inter-RAT radio measurement targets for the second SIM (SIMB) to identify common measurement targets;
identify one or more common measurement results from one or more measurement results of the second radio measurement of the second SIM (SIMB), wherein at least one of the one or more common measurement results corresponds to a common measurement target of the one or more first inter-RAT measurement targets of the first radio measurement and the one or more second inter-RAT measurement targets of the second radio measurement;
provide the one or more common measurement results to the first radio measurement as one or more inter-RAT measurements results of the first radio measurement for the first SIM (SIMA);
perform a subsequent radio measurement for the second SIM (SIMB) for any of the one or more first inter-RAT remaining measurement targets not provided by the previously reported measurement results;
provide one or more measurement results from subsequent radio measurement of the second SIM (SIMB) for any of the one or more first inter-RAT remaining measurement targets to the first SIM (SIMA); and
perform mobility operations with the one or more measurement results of the first radio measurement of the first SIM (SIMA) or the one or more measurement results of the second radio measurement of the second SIM (SIMB).

2. The mobile terminal (100) device of claim 1, wherein performing mobility operations with the one or more measurement results of the first radio measurement or the one or more measurement results of the second radio measurement comprises performing at least one of cell selection, cell reselection, handover, or measurement report transmission with the one or more measurement results of the first radio measurement or the one or more measurement results of the second radio measurement.

3. The mobile terminal (100) device of claim 1 or 2, wherein the second radio measurement is a radio measurement of a master RAT of the second SIM (SIMB).

4. The mobile terminal (100) device of any one of claims 1 to 3, wherein the measurement results of the second radio measurement of the second SIM (SIMB) comprise one or more intra-frequency radio measurement results or one or more inter-frequency radio measurement results.

5. The mobile terminal (100) device of any one of claims 1 to 4, wherein the second radio measurement is an intra-frequency or an inter-frequency radio measurement of a master RAT of the second SIM (SIMB), and wherein the master RAT of the first SIM (SIMA) is a different radio access technology than the master RAT of the second SIM (SIMB).

6. The mobile terminal (100) device of any one of claims 1 to 5, wherein the baseband processing circuit is further configured to:
identify one or more second measurement targets of the second radio measurement of the second SIM (SIMB); and
execute the second radio measurement on the one or more second measurement targets to obtain the one or more measurement results of the second radio measurement.

7. The mobile terminal (100) device of any one of claims 1 to 6, wherein the one or more first measurement targets comprise one or more cells targeted for measurement or one or more carrier frequencies targeted for measurement.

8. The mobile terminal (100) device of claim 7, wherein performing mobility operations with the one or more measurement results of the first radio measurement or the one or more measurement results of the second radio measurement comprises performing at least one of cell selection to a cell of the one or more cells, performing cell reselection to a cell of the one or more cells, performing handover to a cell of the one or more cells, or transmitting a measurement report for a cell of the one or more cells.

9. The mobile terminal (100) device of any one of claims 1 to 5, wherein the baseband processing circuit is further configured to:
identify one or more second measurement targets of the second radio measurement;
execute the second radio measurement on one or more of the first radio measurement targets excluded from the one or more second measurement targets to obtain one or more remaining measurement results; and
provide the one or more remaining measurement results to the first radio measurement as one or more measurement results of the first radio measurement.

10. A method, performed by mobile terminal (100), for performing radio measurements of a first subscriber identity module, SIM (SIMA), the method comprising:
identifying one or more first inter-radio access technology, inter-RAT, measurement targets of a first radio measurement of a master RAT of the first SIM (SIMA);
obtaining one or more previously reported measurement results for one or more second inter-RAT measurement targets of a second radio measurement of a second SIM (SIMB) measured prior to identifying the one or more first inter-RAT measurement targets of the first radio measurement of the first SIM (SIMA);
comparing the one or more first inter-RAT measurement targets of the first radio measurement of the first SIM (SIMA) to the one or more second inter-RAT radio measurement targets for a second SIM (SIMB) to identify common measurement targets;
identifying one or more common measurement results from one or more measurement results of a second radio measurement of the second SIM (SIMB), wherein at least one of the one or more common measurement results corresponds to a measurement target of the one or more first inter-RAT measurement targets of the first radio measurement and the one or more second inter-RAT measurement targets of the second radio measurement;
providing the one or more common measurement results to the first radio measurement as one or more inter-RAT measurement results of the first radio measurement for the first SIM (SIMA);
performing a subsequent radio measurement of the second SIM (SIMB) for any of the one or more first inter-RAT remaining measurement targets not provided by the previously reported measurement results;
providing one or more measurement results from subsequent radio measurement of the second SIM (SIMB) for any of the one or more first inter-RAT remaining measurement targets to the first SIM (SIMA); and
performing mobility operations with the one or more measurement results of the first radio measurement of the first SIM (SIMA) or the one or more measurement results of the second radio measurement of the second SIM (SIMB).

11. The method of claim 10 performed by mobile terminal (100), wherein performing mobility operations with the one or more measurement results of the first radio measurement or the one or more measurement results of the second radio measurement comprises performing at least one of cell selection, cell reselection, handover, or measurement report transmission with the one or more measurement results of the first radio measurement or the one or more measurement results of the second radio measurement.

12. The method of claim 10 performed by mobile terminal (100), wherein the second radio measurement is an intra-frequency radio measurement or an inter-frequency radio measurement of a master RAT of the second SIM (SIMB), and wherein the master RAT of the first SIM (SIMA) is a different radio access technology than the master RAT of the second SIM (SIMB).

13. The method of any one of claims 10 to 12 performed by mobile terminal (100), further comprising:
identifying one or more second measurement targets of the second radio measurement of the second SIM (SIMB); and
executing the second radio measurement on the one or more second measurement targets to obtain the one or more measurement results of the second radio measurement.

14. The method of any one of claims 10 to 12 performed by mobile terminal (100), further comprising:
identifying one or more second measurement targets of the second radio measurement;
executing the second radio measurement on one or more of the first measurement targets excluded from the one or more second measurement targets to obtain one or more remaining measurement results; and
providing the one or more remaining measurement results to the first radio measurement as one or more measurement results of the first radio measurement.

## Patentansprüche

1. Mobiles Endgerät (100), umfassend ein erstes Teilnehmeridentitätsmodul, SIM (SIMA), ein zweites SIM (SIMB), eine Funkverarbeitungsschaltung (104) und eine Basisbandverarbeitungsschaltung (106), die konfiguriert ist, um mit der Funkverarbeitungsschaltung zu interagieren (104), wobei die Basisbandverarbeitungsschaltung konfiguriert ist zum:
Identifizieren eines oder mehrerer erster Inter-Radio-Access-Technologie-, Inter-RAT-, Messziele einer ersten Funkmessung einer Master-RAT der ersten SIM (SIMA);
Erhalten eines oder mehrerer zuvor gemeldeter Messergebnisse für ein oder mehrere zweite Inter-RAT-Messziele einer zweiten Funkmessung der zweiten SIM (SIMB), die vor dem Identifizieren des einen oder der mehreren ersten Inter-RAT-Messziele der ersten Funkmessung der ersten SIM (SIMA) gemessen wurden;
Vergleichen der einen oder der mehreren ersten Inter-RAT-Messziele der ersten Funkmessung der ersten SIM (SIMA) mit der einen oder den mehreren zweiten Inter-RAT-Funkmesszielen der zweiten SIM (SIMB), um gemeinsame Messziele zu identifizieren;
Identifizieren eines oder mehrerer gemeinsamer Messergebnisse von einem oder mehreren Messergebnissen der zweiten Funkmessung der zweiten SIM (SIMB), wobei mindestens eines der einen oder mehreren gemeinsamen Messergebnisse einem gemeinsamen Messziel des einen oder der mehreren ersten Inter-RAT-Messziele der ersten Funkmessung und des einen oder der mehreren zweiten Inter-RAT-Messziele der zweiten Funkmessung entspricht;
Bereitstellen des einen oder der mehreren gemeinsamen Messergebnisse an die erste Funkmessung als ein oder mehrere Inter-RAT-Messergebnisse der ersten Funkmessung für die erste SIM (SIMA);
Durchführen einer nachfolgenden Funkmessung für die zweite SIM (SIMB) für eines der einen oder mehreren verbleibenden ersten Inter-RAT-Messziele, die nicht durch die zuvor gemeldeten Messergebnisse bereitgestellt wurden;
Bereitstellen eines oder mehrerer Messergebnisse aus nachfolgender Funkmessung der zweiten SIM (SIMB) für eines der einen oder mehreren verbleibenden ersten Inter-RAT-Messziele an die erste SIM (SIMA); und
Durchführen von Mobilitätsoperationen mit dem einen oder den mehreren Messergebnissen der ersten Funkmessung der ersten SIM (SIMA) oder dem einen oder den mehreren Messergebnissen der zweiten Funkmessung der zweiten SIM (SIMB).

2. Mobiles Endgerät (100) nach Anspruch 1, wobei das Durchführen von Mobilitätsoperationen mit dem einen oder den mehreren Messergebnissen der ersten Funkmessung oder dem einen oder den mehreren Messergebnissen der zweiten Funkmessung das Durchführen von mindestens einem von einer Zellauswahl, einer Zellwiederauswahl, einer Übergabe oder einer Messberichtübertragung mit dem einen oder den mehreren Messergebnissen der ersten Funkmessung oder dem einen oder den mehreren Messergebnissen der zweiten Funkmessung umfasst.

3. Mobiles Endgerät (100) nach Anspruch 1 oder 2, wobei die zweite Funkmessung eine Funkmessung einer Master-RAT der zweiten SIM (SIMB) ist.

4. Mobiles Endgerät (100) nach einem der Ansprüche 1 bis 3, wobei die Messergebnisse der zweiten Funkmessung der zweiten SIM (SIMB) ein oder mehrere Intra-Frequenz-Funkmessergebnisse oder ein oder mehrere Inter-Frequenz-Funkmessergebnisse umfassen.

5. Mobiles Endgerät (100) nach einem der Ansprüche 1 bis 4, wobei die zweite Funkmessung eine Intra-Frequenz- oder eine Inter-Frequenz-Funkmessung einer Master-RAT der zweiten SIM (SIMB) ist, und wobei die Master-RAT der ersten SIM (SIMA) eine andere Funkzugangstechnologie als die Master-RAT der zweiten SIM (SIMB) ist.

6. Mobiles Endgerät (100) nach einem der Ansprüche 1 bis 5, wobei die Basisbandverarbeitungsschaltung ferner konfiguriert ist zum:
Identifizieren eines oder mehrerer zweiter Messziele der zweiten Funkmessung der zweiten SIM (SIMB); und
Durchführen der zweiten Funkmessung an dem einem oder den mehreren zweiten Messzielen, um das eine oder die mehreren Messergebnisse der zweiten Funkmessung zu erhalten.

7. Mobiles Endgerät (100) nach einem der Ansprüche 1 bis 6, wobei das eine oder die mehreren ersten Messziele eine oder mehrere zur Messung bestimmte Zellen oder eine oder mehrere zur Messung bestimmte Trägerfrequenzen umfassen.

8. Mobiles Endgerät (100) nach Anspruch 7, wobei das Durchführen von Mobilitätsoperationen mit dem einen oder den mehreren Messergebnissen der ersten Funkmessung oder dem einen oder den mehreren Messergebnissen der zweiten Funkmessung das Durchführen von mindestens einem von einer Zellauswahl an einer Zelle der einen oder mehreren Zellen, das Durchführen einer Zellwiederauswahl an einer Zelle der einen oder mehreren Zellen, das Durchführen einer Übergabe an eine Zelle der einen oder mehreren Zellen, oder das Übertragen eines Messberichts für eine Zelle der einen oder mehreren Zellen umfasst.

9. Mobiles Endgerät (100) nach einem der Ansprüche 1 bis 5, wobei die Basisbandverarbeitungsschaltung ferner konfiguriert ist zum:
Identifizieren eines oder mehrerer zweiter Messziele der zweiten Funkmessung;
Durchführen der zweiten Funkmessung an einem oder mehreren der ersten Funkmessziele, die von dem einen oder den mehreren zweiten Messzielen ausgeschlossen waren, um ein oder mehrere verbleibende Messergebnisse zu erhalten; und
Bereitstellen des einen oder der mehreren verbliebenen Messergebnisse an die erste Funkmessung als ein oder mehrere Messergebnisse der ersten Funkmessung.

10. Verfahren, das von einem mobilen Endgerät (100) durchgeführt wird, zum Durchführen von Funkmessungen eines ersten Teilnehmeridentitätsmoduls, SIM (SIMA), wobei das Verfahren umfasst:
Identifizieren eines oder mehrerer erster Inter-Radio-Access-Technologie-, Inter-RAT-, Messziele einer ersten Funkmessung einer Master-RAT der ersten SIM (SIMA);
Erhalten eines oder mehrerer zuvor gemeldeter Messergebnisse für ein oder mehrere zweite Inter-RAT-Messziele einer zweiten Funkmessung einer zweiten SIM (SIMB), die vor dem Identifizieren des einen oder der mehreren ersten Inter-RAT-Messziele der ersten Funkmessung der ersten SIM (SIMA) gemessen wurden;
Vergleichen der einen oder der mehreren ersten Inter-RAT-Messziele der ersten Funkmessung der ersten SIM (SIMA) mit der einen oder den mehreren zweiten Inter-RAT-Funkmesszielen einer zweiten SIM (SIMB), um gemeinsame Messziele zu identifizieren;
Identifizieren eines oder mehrerer gemeinsamer Messergebnisse von einem oder mehreren Messergebnissen einer zweiten Funkmessung der zweiten SIM (SIMB), wobei mindestens eines der einen oder mehreren gemeinsamen Messergebnisse einem Messziel der einen oder mehreren ersten Inter-RAT-Messziele der ersten Funkmessung und der einen oder den mehreren zweiten Inter-RAT-Messziele der zweiten Funkmessung entspricht;
Bereitstellen des einen oder der mehreren gemeinsamen Messergebnisse an die erste Funkmessung als ein oder mehrere Inter-RAT-Messergebnisse der ersten Funkmessung für die erste SIM (SIMA);
Durchführen einer nachfolgenden Funkmessung der zweiten SIM (SIMB) für eine von der einen oder mehreren verbleibenden ersten Inter-RAT-Messziele, die nicht durch die zuvor gemeldeten Messergebnisse bereitgestellt wurden;
Bereitstellen eines oder mehrerer Messergebnisse aus nachfolgender Funkmessung der zweiten SIM (SIMB) für eines der einen oder mehreren verbleibenden ersten Inter-RAT-Messziele an die erste SIM (SIMA); und
Durchführen von Mobilitätsoperationen mit dem einen oder den mehreren Messergebnissen der ersten Funkmessung der ersten SIM (SIMA) oder dem einen oder den mehreren Messergebnissen der zweiten Funkmessung der zweiten SIM (SIMB).

11. Verfahren nach Anspruch 10, das von einem mobilen Endgerät (100) durchgeführt wird, wobei das Durchführen von Mobilitätsoperationen mit dem einen oder den mehreren Messergebnissen der ersten Funkmessung oder dem einen oder den mehreren Messergebnissen der zweiten Funkmessung das Durchführen von mindestens einem von einer Zellauswahl, einer Zellwiederauswahl, einer Übergabe oder einer Messberichtübertragung mit dem einen oder den mehreren Messergebnissen der ersten Funkmessung oder dem einen oder den mehreren Messergebnissen der zweiten Funkmessung umfasst.

12. Verfahren nach Anspruch 10, das von einem mobilen Endgerät (100) durchgeführt wird, wobei die zweite Funkmessung eine Intra-Frequenz-Funkmessung oder eine Inter-Frequenz-Funkmessung einer Master-RAT der zweiten SIM (SIMB) ist, und wobei die Master-RAT der ersten SIM (SIMA) eine andere Funkzugangstechnologie als die Master-RAT der zweiten SIM (SIMB) ist.

13. Verfahren nach einem der Ansprüche 10 bis 12, durchgeführt von einem mobilen Endgerät (100), ferner umfassend:
Identifizieren eines oder mehrerer zweiter Messziele der zweiten Funkmessung der zweiten SIM (SIMB); und
Durchführen der zweiten Funkmessung an dem einem oder den mehreren zweiten Messzielen, um das eine oder die mehreren Messergebnisse der zweiten Funkmessung zu erhalten.

14. Verfahren nach einem der Ansprüche 10 bis 12, durchgeführt von einem mobilen Endgerät (100), ferner umfassend:
Identifizieren eines oder mehrerer zweiter Messziele der zweiten Funkmessung;
Durchführen der zweiten Funkmessung an einem oder mehreren der ersten Funkmessziele, die von dem einen oder den mehreren zweiten Messzielen ausgeschlossen waren, um ein oder mehrere verbleibende Messergebnisse zu erhalten; und
Bereitstellen des einen oder der mehreren verbliebenen Messergebnisse an die erste Funkmessung als ein oder mehrere Messergebnisse der ersten Funkmessung.

## Revendications

1. Un dispositif de terminal mobile (100) comprenant un premier module d'identité d'abonné, SIM (SIMA), un second SIM (SIMB), un circuit de traitement radio (104) et un circuit de traitement de bande de base (106) configuré pour interagir avec le circuit de traitement radio (104), le circuit de traitement de bande de base étant configuré pour :
identifier une ou plusieurs premières cibles de mesure inter-technologie d'accès radio, inter-RAT, d'une première mesure radio d'une RAT principale du premier SIM (SIMA) ;
obtenir un ou plusieurs résultats de mesure rapportés précédemment pour une ou plusieurs secondes cibles de mesure inter-RAT d'une seconde mesure radio du second SIM (SIMB) mesurée avant l'identification des une ou plusieurs premières cibles de mesure inter-RAT de la première mesure radio du premier SIM (SIMA) ;
comparer les une ou plusieurs premières cibles de mesure inter-RAT de la première mesure radio du premier SIM (SIMA) aux une ou plusieurs secondes cibles de mesure radio inter-RAT pour le second SIM (SIMB) pour identifier des cibles de mesure communes ;
identifier un ou plusieurs résultats de mesure communs à partir d'un ou plusieurs résultats de mesure de la seconde mesure radio du second SIM (SIMB), dans lequel au moins un des un ou plusieurs résultats de mesure communs correspond à une cible de mesure commune des une ou plusieurs premières cibles de mesure inter-RAT de la première mesure radio et des une ou plusieurs secondes cibles de mesure inter-RAT de la seconde mesure radio ;
fournir les un ou plusieurs résultats de mesure communs à la première mesure radio comme un ou plusieurs résultats de mesure inter-RAT de la première mesure radio pour le premier SIM (SIMA) ;
effectuer une mesure radio subséquente pour le second SIM (SIMB) pour n'importe laquelle des une ou plusieurs premières cibles de mesure inter-RAT restantes non fournies par les résultats de mesure rapportés précédemment ;
fournir un ou plusieurs résultats de mesure provenant d'une mesure radio subséquente du second SIM (SIMB) pour n'importe laquelle des une ou plusieurs premières cibles de mesure inter-RAT restantes au premier SIM (SIMA) ; et
effectuer des opérations de mobilité avec les un ou plusieurs résultats de mesure de la première mesure radio du premier SIM (SIMA) ou les un ou plusieurs résultats de mesure de la seconde mesure radio du second SIM (SIMB).

2. Le dispositif de terminal mobile (100) selon la revendication 1, dans lequel l'exécution d'opérations de mobilité avec les un ou plusieurs résultats de mesure de la première mesure radio ou les un ou plusieurs résultats de mesure de la seconde mesure radio comprend l'exécution d'au moins un parmi une sélection de cellule, une resélection de cellule, un transfert ou une transmission de rapport de mesure avec les un ou plusieurs résultats de mesure de la première mesure radio ou les un ou plusieurs résultats de mesure de la seconde mesure radio.

3. Le dispositif de terminal mobile (100) selon la revendication 1 ou 2, dans lequel la seconde mesure radio est une mesure radio d'une RAT principale du second SIM (SIMB).

4. Le dispositif de terminal mobile (100) selon l'une quelconque des revendications 1 à 3, dans lequel les résultats de mesure de la seconde mesure radio du second SIM (SIMB) comprennent un ou plusieurs résultats de mesure radio intra-fréquence ou un ou plusieurs résultats de mesure radio inter-fréquence.

5. Le dispositif de terminal mobile (100) selon l'une quelconque des revendications 1 à 4, dans lequel la seconde mesure radio est une mesure radio intra-fréquence ou inter-fréquence d'une RAT principale du second SIM (SIMB) et dans lequel la RAT principale du premier SIM (SIMA) est une technologie d'accès radio différente de la RAT principale du second SIM (SIMB).

6. Le dispositif de terminal mobile (100) selon l'une quelconque des revendications 1 à 5, dans lequel le circuit de traitement de bande de base est configuré en outre pour :
identifier une ou plusieurs secondes cibles de mesure de la seconde mesure radio du second SIM (SIMB) ; et
exécuter la seconde mesure radio sur les une ou plusieurs secondes cibles de mesure pour obtenir les un ou plusieurs résultats de mesure de la seconde mesure radio.

7. Le dispositif de terminal mobile (100) selon l'une quelconque des revendications 1 à 6, dans lequel les une ou plusieurs premières cibles de mesure comprennent une ou plusieurs cellules ciblées pour une mesure ou une ou plusieurs fréquences porteuses ciblées pour une mesure.

8. Le dispositif de terminal mobile (100) selon la revendication 7, dans lequel l'exécution d'opérations de mobilité avec les un ou plusieurs résultats de mesure de la première mesure radio ou les un ou plusieurs résultats de mesure de la seconde mesure radio comprend l'exécution d'au moins une parmi une sélection de cellule vers une cellule des une ou plusieurs cellules, l'exécution d'une resélection de cellule vers une cellule des une ou plusieurs cellules, l'exécution d'un transfert à une cellule des une ou plusieurs cellules ou la transmission d'un rapport de mesure pour une cellule des une ou plusieurs cellules.

9. Le dispositif de terminal mobile (100) selon l'une quelconque des revendications 1 à 5, dans lequel le circuit de traitement de bande de base est configuré en outre pour :
identifier une ou plusieurs secondes cibles de mesure de la seconde mesure radio ;
exécuter la seconde mesure radio sur une ou plusieurs des premières cibles de mesure radio exclues des une ou plusieurs secondes cibles de mesure pour obtenir un ou plusieurs résultats de mesure restants ; et
fournir les un ou plusieurs résultats de mesure restants à la première mesure radio comme un ou plusieurs résultats de mesure de la première mesure radio.

10. Un procédé, effectué par un terminal mobile (100), pour effectuer des mesures radio d'un premier module d'identité d'abonné, SIM (SIMA), le procédé comprenant :
l'identification d'une ou plusieurs premières cibles de mesure inter-technologie d'accès radio, inter-RAT, d'une première mesure radio d'une RAT principale du premier SIM (SIMA) ;
l'obtention d'un ou plusieurs résultats de mesure rapportés précédemment pour une ou plusieurs secondes cibles de mesure inter-RAT d'une seconde mesure radio d'un second SIM (SIMB) mesurée avant l'identification des une ou plusieurs premières cibles de mesure inter-RAT de la première mesure radio du premier SIM (SIMA) ;
la comparaison des une ou plusieurs premières cibles de mesure inter-RAT de la première mesure radio du premier SIM (SIMA) aux une ou plusieurs secondes cibles de mesure radio inter-RAT pour un second SIM (SIMB) pour identifier des cibles de mesure communes ;
l'identification d'un ou plusieurs résultats de mesure communs à partir d'un ou plusieurs résultats de mesure d'une seconde mesure radio du second SIM (SIMB),
dans lequel au moins un des un ou plusieurs résultats de mesure communs correspond à une cible de mesure des une ou plusieurs premières cibles de mesure inter-RAT de la première mesure radio et des une ou plusieurs secondes cibles de mesure inter-RAT de la seconde mesure radio ;
la fourniture des un ou plusieurs résultats de mesure communs à la première mesure radio comme un ou plusieurs résultats de mesure inter-RAT de la première mesure radio pour le premier SIM (SIMA) ;
l'exécution d'une mesure radio subséquente du second SIM (SIMB) pour n'importe laquelle des une ou plusieurs premières cibles de mesure inter-RAT restantes non fournies par les résultats de mesure rapportés précédemment ;
la fourniture d'un ou plusieurs résultats de mesure provenant d'une mesure radio subséquente du second SIM (SIMB) pour n'importe laquelle des une ou plusieurs premières cibles de mesure inter-RAT restantes au premier SIM (SIMA) ; et
l'exécution d'opérations de mobilité avec les un ou plusieurs résultats de mesure de la première mesure radio du premier SIM (SIMA) ou les un ou plusieurs résultats de mesure de la seconde mesure radio du second SIM (SIMB).

11. Le procédé selon la revendication 10, effectué par un terminal mobile (100), dans lequel l'exécution d'opérations de mobilité avec les un ou plusieurs résultats de mesure de la première mesure radio ou les un ou plusieurs résultats de mesure de la seconde mesure radio comprend l'exécution d'au moins un parmi une sélection de cellule, une resélection de cellule, un transfert ou une transmission de rapport de mesure avec les un ou plusieurs résultats de mesure de la première mesure radio ou les un ou plusieurs résultats de mesure de la seconde mesure radio.

12. Le procédé selon la revendication 10, effectué par un terminal mobile (100), dans lequel la seconde mesure radio est une mesure radio intra-fréquence ou une mesure radio inter-fréquence d'une RAT principale du second SIM (SIMB) et dans lequel la RAT principale du premier SIM (SIMA) est une technologie d'accès radio différente de la RAT principale du second SIM (SIMB).

13. Le procédé selon l'une quelconque des revendications 10 à 12, effectué par un terminal mobile (100), comprenant en outre :
l'identification d'une ou plusieurs secondes cibles de mesure de la seconde mesure radio du second SIM (SIMB) ; et
l'exécution de la seconde mesure radio sur les une ou plusieurs secondes cibles de mesure pour obtenir les un ou plusieurs résultats de mesure de la seconde mesure radio.

14. Le procédé selon l'une quelconque des revendications 10 à 12, effectué par un terminal mobile (100), comprenant en outre :
l'identification d'une ou plusieurs secondes cibles de mesure de la seconde mesure radio ;
l'exécution de la seconde mesure radio sur une ou plusieurs des premières cibles de mesure exclues des une ou plusieurs secondes cibles de mesure pour obtenir un ou plusieurs résultats de mesure restants ; et
la fourniture des un ou plusieurs résultats de mesure restants à la première mesure radio comme un ou plusieurs résultats de mesure de la première mesure radio.
